(19) **Europäisches Patentamt / European Patent Office / Office européen des brevets**

(11) **EP 2 061 958 B1**

(12) **EUROPEAN PATENT SPECIFICATION**

(45) Date of publication and mention
of the grant of the patent:
**07.04.2010 Bulletin 2010/14**

(21) Application number: **07825076.8**

(22) Date of filing: **10.09.2007**

(51) Int Cl.:
**F01N 11/00** *(2006.01)*

(86) International application number:
**PCT/IB2007/002585**

(87) International publication number:
**WO 2008/032166 (20.03.2008 Gazette 2008/12)**

(54) **CATALYST DETERIORATION MONITORING SYSTEM AND CATALYST DETERIORATION MONITORING METHOD**

SYSTEM ZUR ÜBERWACHUNG DES KATALYSATORVERSCHLEISSES UND VERFAHREN ZUR ÜBERWACHUNG DES KATALYSATORVERSCHLEISSES

SYSTÈME DE SURVEILLANCE DE DÉTÉRIORATION DE CATALYSEUR ET PROCÉDÉ DE SURVEILLANCE DE DÉTÉRIORATION DU CATALYSEUR

(84) Designated Contracting States:
**DE FR**

(30) Priority: **11.09.2006 JP 2006245650**

(43) Date of publication of application:
**27.05.2009 Bulletin 2009/22**

(73) Proprietors:
• **Toyota Jidosha Kabushiki Kaisha**
**Toyota-shi, Aichi 471-8571 (JP)**
• **DENSO CORPORATION**
**Kariya-city, Aichi-pref. 448-8661 (JP)**

(72) Inventors:
• **SAWADA, Hiroshi**
**Toyota-shi**
**Aichi-ken 471-8571 (JP)**
• **HORI, Tsunenobu**
**Kariya-City**
**Aichi-Pref 448-8661 (JP)**

(74) Representative: **TBK-Patent**
**Bavariaring 4-6**
**80336 München (DE)**

(56) References cited:
**EP-A- 0 735 250      US-A- 6 134 883**
**US-B1- 6 467 259**

**Description**

BACKGROUND OF THE INVENTION

1. Field of the Invention

The invention relates to a catalyst deterioration monitoring system. More specifically, the invention relates to a catalyst deterioration monitoring system and a catalyst deterioration monitoring method that determine the deterioration of a storage reduction NOx catalyst disposed in an exhaust passage for an internal combustion engine.

2. Description of the Related Art

A three-way catalyst that purifies exhaust gas discharged from an internal combustion engine is widely used. The three-way catalyst includes an oxygen storage material that has the function of storing oxygen. The three-way catalyst purifies the exhaust gas with high efficiency, by storing and releasing oxygen to maintain an air-fuel ratio in the catalyst at a stoichiometric air-fuel ratio.

However, the three-way catalyst cannot purify the exhaust gas at a high purification rate, unless the air-fuel ratio of the exhaust gas flowing into the three-way catalyst is close to the stoichiometric air-fuel ratio. Therefore, when using an internal combustion engine that may operate at an air-fuel ratio leaner than the stoichiometric air-fuel ratio (i.e., a lean air-fuel ratio), an exhaust passage is provided with a NOx storage reduction catalyst that includes a NOx storage material that has the function of storing NOx (hereinafter, the NOx storage reduction catalyst will be simply referred to as "NOx catalyst").

Because the NOx catalyst is provided, the NOx catalyst stores NOx in the exhaust gas when the internal combustion engine operates at a lean air-fuel ratio. When the NOx stored in the NOx catalyst is purified, a rich spike is executed to temporarily change the air-fuel ratio from a lean air-fuel ratio to a rich air-fuel ratio or the stoichiometric air-fuel ratio. When the rich spike is executed, the exhaust gas that contains HC, CO, and the like flows into the NOx catalyst. Because the HC, CO, and the like serve as a reducing agent, the stored NOx is purified, that is, the stored NOx is reduced to $N_2$, and the $N_2$ is released.

An internal combustion engine, in which lean combustion is performed, may operate at the stoichiometric air-fuel ratio, depending on the operating condition. When the internal combustion engine operates art the stoichiometric air-fuel ratio, the NOx catalyst is generally used as the three-way catalyst. Therefore, the NOx catalyst includes the oxygen storage material, in addition to the NOx storage material. When the internal combustion engine operates at a lean air-fuel ratio, oxygen is stored in the oxygen storage material of the NOx catalyst up to the capacity

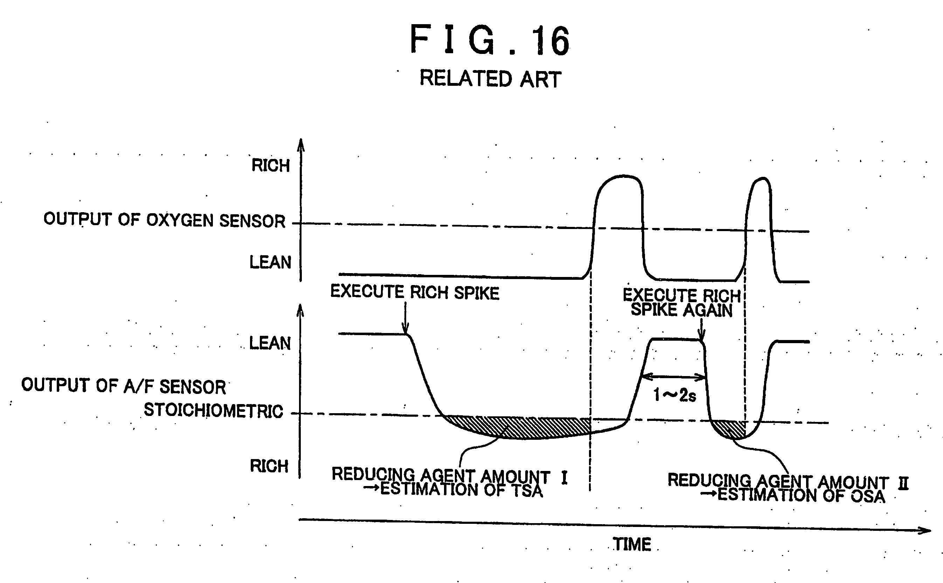

JP 8 260 949 describes an apparatus that separately detects the amount of oxygen stored in the NOx catalyst (hereinafter, referred to as "oxygen storage amount") and the amount of NOx stored in the NOx catalyst (hereinafter, referred to as "NOx storage amount"), by executing two rich spikes in succession. FIG 16 is a diagram explaining the operation of the conventional apparatus.

In the apparatus described in JP 8 260 949, an air-fuel ratio sensor (A/F sensor) is disposed upstream of the NOx catalyst, and an oxygen sensor ($O_2$ sensor) is disposed downstream of the NOx catalyst. When the first rich spike is executed, and the reducing agent such as HC and CO flows into the NOx catalyst, oxygen and NOx stored in the NOx catalyst react with the reducing agent, and thus, the oxygen and NOx are consumed. When all of the stored oxygen and NOx is consumed, the reducing agent flows to an area downstream of the NOx catalyst. As a result, the output of the oxygen sensor downstream of the NOx catalyst changes from a lean output indicating that the air-fuel ratio is lean, to a rich output indicating that the air-fuel ratio is rich. Accordingly, the amount of reducing agent that has flown into the NOx catalyst up to the time point at which the output of the oxygen sensor changes to the rich output (i.e., "reducing agent amount I" in FIG. 16) is equivalent to the sum of the oxygen storage amount and the NOx storage amount in the NOx catalyst. Thus, the sum of the oxygen storage amount and the NOx storage amount (hereinafter, referred to as "total storage amount") is calculated based on the reducing agent amount I calculated based on the output of the air-fuel ratio sensor disposed upstream of the NOx catalyst.

The air-fuel ratio is maintained at a lean air-fuel ratio during a period from when the first rich spike is finished, until when oxygen is stored in the oxygen storage material of the NOx catalyst up to the capacity. Then, the second rich spike is executed. When the second rich spike is executed, the amount of reducing agent that has flown into the NOx catalyst up to the time point at which the output of the oxygen sensor downstream of the NOx catalyst changes to the rich output (i.e., "reducing agent amount II" in FIG. 16) is calculated based on the output of the air-fuel ratio sensor upstream of the NOx catalyst, in the same manner as the manner in which the reducing agent amount I is calculated.

The time required for the oxygen storage material of the NOx catalyst to store oxygen up to the capacity is extremely short (for example, one to two seconds). That is, the time period during which the air-fuel ratio is maintained at a lean air-fuel ratio between the first rich spike and the second rich spike is extremely short. Therefore, NOx is hardly stored in the NOx catalyst during this period. That is, when the second rich spike is started, the amount of NOx stored in the NOx catalyst is regarded as being zero, while oxygen has been stored in the NOx catalyst up to the capacity. Therefore, the reducing agent amount II at the second rich spike is equivalent to the oxygen storage amount in the NOx catalyst. Accordingly, the oxygen storage amount in the NOx catalyst is calculated based on the reducing agent amount II. Thus, a value obtained by subtracting the oxygen storage amount from the above-described total storage amount is equivalent to the NOx storage amount before the first rich spike is started.

In the catalyst deterioration monitoring system described in JP 8 260 949, the NOx storage ability of the NOx catalyst is determined based on the NOx storage amount detected in the above-described manner, as follows. In the above-described catalyst deterioration monitoring system, the amount of NOx discharged from the internal combustion engine per unit time at each load and at each rotational speed of the internal combustion engine is empirically determined in advance during steady operation. Thus, the experimental data is obtained, and stored in an ECU. When the internal combustion engine operates at a lean air-fuel ratio, the amount of NOx that has flown into the NOx catalyst (hereinafter, referred to as "inflow NOx amount") is estimated by accumulating the amount of discharged NOx per unit time determined based on the experimental data. The first rich spike is started at the time point at which the inflow NOx amount reaches a predetermined value. It is possible to determine the proportion of the NOx captured by the NOx catalyst in all of the NOx flowing into the NOx catalyst, by comparing the predetermined value, that is, the amount of NOx that has flown into the NOx catalyst up to the time point at which the rich spike is started, with the above-described NOx storage amount. When the proportion is above a predetermined determination value, it is determined that the NOx storage ability is normal. When the proportion is below the determination value, it is determined that the NOx storage ability is deteriorated.

However, the inflow NOx amount used in the above-described catalyst deterioration monitoring system is an estimated value estimated based on the experimental data that is stored in advance. The experimental data, based on which the inflow NOx amount is estimated, is obtained during the steady operation, as described above. However, when the inflow NOx amount is estimated, the actual operating state momentarily changes. Therefore, the estimated inflow NOx amount generally has a small error. Also, it is considered that an actual NOx discharge characteristic may deviate from the above-described experimental data due to variation among individual internal combustion engines, and variation with time. The estimated inflow NOx amount also has an error due to this influence.

Thus, in the above-described catalyst deterioration monitoring system, it is inevitable that the estimated inflow NOx amount has an error. Therefore, the deterioration of the catalyst may not be determined with sufficient accuracy.

## SUMMARY OF THE INVENTION

The invention provides a catalyst deterioration monitoring system and a catalyst deterioration monitoring method that accurately determine deterioration of a storage reduction NOx catalyst.

A first aspect of the invention relates to a catalyst deterioration monitoring system that determines deterioration of a storage reduction NOx catalyst disposed in an exhaust passage for an internal combustion engine. The catalyst deterioration monitoring system includes NOx detection means, disposed upstream of the NOX catalyst, which generates an output in accordance with a concentration of NOx in exhaust gas; an exhaust gas sensor, disposed downstream of the NOx catalyst, which generates an output in accordance with an air-fuel ratio of the exhaust gas; inflow NOx amount calculation means for calculating an inflow NOx amount that is an amount of NOx that has flown into the NOx catalyst, by accumulating the output of the NOx detection means; rich spike means for executing a rich spike that temporarily changes the air-fuel ratio of the exhaust gas discharged from the internal combustion engine, from a lean air-fuel ratio to a rich air-fuel ratio or a stoichiometric air-fuel ratio; total storage amount calculation means for calculating a total storage amount that is a sum of an oxygen storage amount that is an amount of oxygen stored in the NOx catalyst before the rich spike is started, and a NOx storage amount that is an amount of NOx stored in the NOx catalyst before the rich spike is started, based on the output generated by the exhaust gas sensor when the rich spike is being executed; and diagnostic means for determining deterioration of the NOx catalyst based on the inflow NOx amount and the total storage amount.

In the above-described aspect, the diagnostic means may include oxygen storage amount calculation means for calculating the oxygen storage amount in the total storage amount based on the inflow NOx amount and the total storage amount, and oxygen storage ability determination means for determining oxygen storage ability of the NOx catalyst based on the oxygen storage amount.

In the above-described aspect, the catalyst deterioration monitoring system may further include execution condition setting means for setting at least two different execution conditions under each of which at least one rich spike is executed. The oxygen storage amount calculation means may calculate the oxygen storage amount based on a relation between the inflow NOx amount and the total storage amount, which relates to at least two rich spikes that are executed under the at least two different execution conditions.

In the above-described aspect, the oxygen storage amount calculation means may calculate a value that is equivalent to the total storage amount when the inflow NOx amount is zero, by extrapolating the relation between the inflow NOx amount and the total storage amount, which relates to the at least two rich spikes that are executed under the at least two different execution conditions that the inflow NOx amount reaches at least two different respective levels, and the oxygen storage amount calculation means may regard the value as the oxygen storage amount.

In the above-described aspect, the diagnostic means may include NOx storage amount calculation means for calculating the NOx storage amount by subtracting the oxygen storage amount from the total storage amount, and NOx storage ability determination means for determining NOx storage ability of the NOx catalyst based on the calculated NOx storage amount.

In the above-described aspect, the NOx detection means may have a function of detecting the air-fuel ratio of the exhaust gas, and the total storage amount calculation means may calculate the total storage amount based on the output of the exhaust gas sensor, and the air-fuel ratio detected by the NOx detection means.

In the above-described aspect, the NOx detection means may have a function of detecting the air-fuel ratio of the exhaust gas, and the inflow NOx amount calculation means may start accumulation of the output of the NOx detection means when the air-fuel ratio detected by the NOx detection means changes from a rich air-fuel ratio to a lean air-fuel ratio after the rich spike is finished.

A second aspect of the invention relates to a catalyst deterioration monitoring method that uses a storage reduction NOx catalyst disposed in an exhaust passage for an internal combustion engine; a NOx sensor, disposed upstream of the NOx catalyst, which generates an output in accordance with a concentration of NOx in exhaust gas; and an exhaust gas sensor, disposed downstream of the NOx catalyst, which generates an output in accordance with an air-fuel ratio of the exhaust gas. The method includes calculating an inflow NOx amount that is an amount of NOx that has flown into the NOx catalyst, by accumulating the output of the NOx sensor, calculating a total storage amount that is a sum of an oxygen storage amount that is an amount of oxygen stored in the NOx catalyst before a rich spike is started, and a NOx storage amount that is an amount of NOx stored in the NOx catalyst before the rich spike is started, based on the output generated by the exhaust gas sensor when the rich spike is being executed to temporarily change the air-fuel ratio of the exhaust gas discharged from the internal combustion engine, from a lean air-fuel ratio to a rich air-fuel ratio or a stoichiometric air-fuel ratio; and determining deterioration of the NOx catalyst based on the inflow NOx amount and the total storage amount.

In the above-described aspect, the inflow NOx amount, which is the amount of NOx that has flown into the NOx catalyst, is determined by accumulating the output of the NOx detection means disposed upstream of the storage reduction NOx catalyst disposed in the exhaust passage for the internal combustion engine. The deterioration of the NOx catalyst is determined based on the inflow NOx amount and the total storage amount in the NOx catalyst detected when the rich spike is executed. In the above-described aspect, the inflow NOx amount is actually measured by providing the NOx detection means. Therefore, the inflow NOx amount is accurately determined. Thus, as compared to the case where the inflow NOx amount is estimated based on the engine operating state, the deterioration of the NOx catalyst is more accurately determined. Also, in the first aspect, the deterioration of the NOx catalyst is determined with high accuracy, without providing the NOx determination means downstream of the NOx catalyst. Thus, as compared to a system where the NOx detection means are provided upstream and downstream of the NOx catalyst, the number of expensive NOx detection means is reduced, and therefore, the manufacturing cost is reduced.

In the above-described aspect, the oxygen storage amount in the total storage amount is calculated based on the inflow NOx amount and the total storage amount, and the oxygen storage ability of the NOx catalyst is determined based on the oxygen storage ability Accordingly, the deterioration of the oxygen storage ability of the NOx catalyst is determined with high accuracy.

In the above-described aspect, at least two different execution conditions, under each of which at least one rich spike is executed, are set. The oxygen storage amount is calculated based on the relation between the inflow NOx amount and the total storage amount, which relates to at least two rich spikes that are executed under the at least two different execution conditions. Therefore, the oxygen storage amount in the NOx catalyst is more accurately determined.

In the above-described aspect, the value, which is equivalent to the total storage amount when the inflow NOx amount is zero, is calculated by extrapolating the relation between the inflow NOx amount and the total storage amount, which relates to the at least two rich spikes that are executed under the at least two different execution conditions that the inflow NOx amount reaches at least two different respective levels. The value is regarded as the oxygen storage amount. Therefore, the oxygen storage amount in the NOx catalyst is easily and accurately determined.

In the above-described aspect, the NOx storage amount is calculated by subtracting the oxygen storage amount from the total storage amount. The NOx storage ability of the NOx catalyst is determined based on the NOx storage amount. Therefore, the deterioration of the NOx storage ability of the NOx catalyst is accurately determined.

In the above-described aspect, the NOx detection means has a function of detecting the air-fuel ratio of the exhaust gas, and the total storage amount calculation means calculates the total storage amount based on the output of the exhaust gas sensor, and the air-fuel ratio detected by the NOx detection means. Thus, because the NOx detection means is used also as an air-fuel ratio sensor, the manufacturing cost is further reduced.

In the above-described aspect, the NOx detection means has a function of detecting the air-fuel ratio of the exhaust gas. The inflow NOx amount, which is the amount of NOx that has flown into the NOx catalyst, is determined by starting accumulation of the output of the NOx detection means when the air-fuel ratio detected by the NOx detection means changes from a rich air-fuel ratio to a lean air-fuel ratio after the rich spike is finished. Thus, when the inflow NOx amount is determined, the accumulation of the output of the NOx detection means is started at the optimal timing. Therefore, the inflow NOx amount is more accurately determined. Accordingly, the deterioration of the NOx catalyst is further more accurately determined. Further, because the NOx detection means is used also as an air-fuel ratio sensor, the manufacturing cost is further reduced.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG 1 is a diagram showing the configuration of a system according to a first embodiment of the invention;
FIG 2 is a cross sectional view showing the configuration of the sensor portion of a NOx sensor provided in the system shown in FIG 1;
FIG 3 is a timing chart explaining operation in the first embodiment;
FIG 4 is a diagram explaining a method of calculating a total storage amount TSA;
FIG 5 is a diagram showing the relation between a determination value used to determine deterioration of a NOx catalyst, and an inflow NOx amount NOxIN at the start of a rich spike;
FIG 6 is a diagram showing the relation between the inflow NOx amount, which is the amount of NOx that has flown into the NOx catalyst, and the total storage amount TSA (in a comparative example);
FIG 7 is a diagram showing the relation between the inflow NOx amount, which is the amount of NOx that has flown into the NOx catalyst, and the total storage amount TSA (in a comparative example);
FIG 8 is a flowchart of a routine executed in the first embodiment of the invention;
FIG 9 is a timing chart explaining operation in the second embodiment;
FIG 10 is a diagram showing the relation between the inflow NOx amount, which is the amount of NOx that has flown into the NOx catalyst, and the total storage amount TSA;
FIG 11 is a diagram showing the relation between the inflow NOx amount, which is the amount of NOx that has flown into the NOx catalyst, and the total storage amount TSA;

FIG 12 is a diagram showing the relation between the inflow NOx amount, which is the amount of NOx that has flown into the NOx catalyst, and the total storage amount TSA;
FIG 13 is a diagram showing the relation between the inflow NOx amount, which is the amount of NOx that has flown into the NOx catalyst, and the total storage amount TSA;
FIG 14 is a diagram showing the relation between the inflow NOx amount, which is the amount of NOx that has flown into the NOx catalyst, and a NOx storage amount NSA;
FIG 15 is a flowchart of a routine executed in the second embodiment of the invention; and
FIG 16 is a diagram explaining operation of a conventional apparatus.

DETAILED DESCRIPTION OF THE EMBODIMENTS

First embodiment

[Description of Configuration of System]

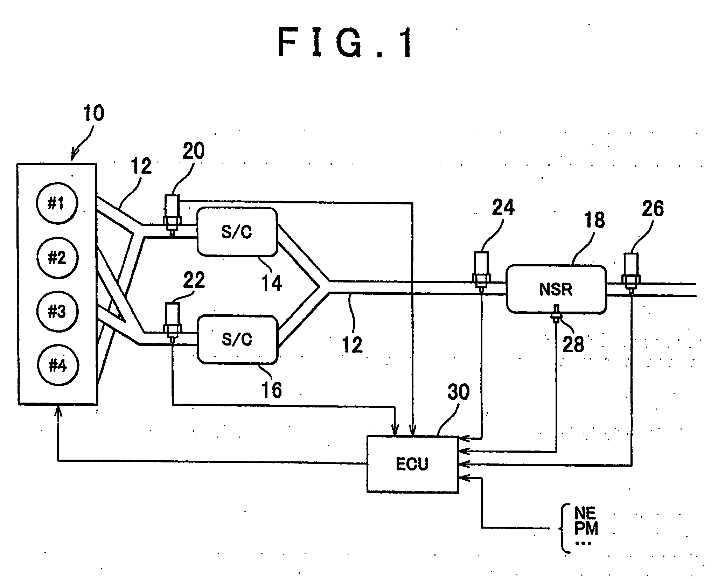

FIG 1 describes the configuration of a system according to a first embodiment of the invention. The system shown in FIG. 1 includes an internal combustion engine 10. The internal combustion engine 10 shown in FIG. 1 is an inline four-cylinder engine that includes four cylinders # 1 to #4. In the invention, the number of cylinders is not limited to four, and the arrangement of cylinders is not limited to the inline arrangement.

In the internal combustion engine 10, an air-fuel mixture at an air-fuel ratio that is above a stoichiometric air-fuel ratio (hereinafter, referred to as "lean air-fuel ratio") is burned. Thus, the internal combustion engine 10 operates. The internal combustion engine 10 may be a port injection engine in which the fuel is injected into an intake port, an in-cylinder direct injection engine in which the fuel is injected directly into a cylinder, or an engine in which the port injection and the in-cylinder direct injection are used in combination.

In an exhaust passage 12 for the internal combustion engine 10, two start catalysts (upstream catalysts) 14 and 16, and one NOx catalyst (NSR) 18 are disposed. The exhaust gas discharged from the cylinders #1 and #4 flows into the start catalyst 14. The exhaust gas discharged from the cylinders #2 and #3 flows into the start catalyst 16. The exhaust gas that has passed through the start catalyst 14, and the exhaust gas that has passed through the start catalyst 16 flow together into the NOx catalyst 18.

The start catalysts 14 and 16 simultaneously purify HC, CO and NOx by storing and releasing oxygen when the air-fuel ratio of the exhaust gas flowing into the start catalysts 14 and 16 is close to the stoichiometric air-fuel ratio. Thus, the start catalysts 14 and 16 function as three-way catalysts.

The NOx catalyst 18 stores NOx when the air-fuel ratio of the exhaust gas flowing into the NOx catalyst 18 is a lean air-fuel ratio. The NOx catalyst 18 purifies the stored NOx, i.e., reduces the stored NOx to $N_2$, and releases the $N_2$ when the air-fuel ratio of the exhaust gas flowing into the NOx catalyst 18 is rich. Thus, the NOx catalyst 18 functions as a NOx storage reduction catalyst. The NOx catalyst 18 also has ability to store oxygen. When the internal combustion engine 10 operates at the stoichiometric air-fuel ratio, the NOx catalyst 18 functions as the three-way catalyst.

In the exhaust passage 12, an oxygen sensor 20 is disposed upstream of the start catalyst 14, an oxygen sensor 22 is disposed upstream of the start catalyst 16, a NOx sensor 24 is disposed upstream of the NOx catalyst 18, and a downstream-side oxygen sensor 26 is disposed downstream of the NOx catalyst 18.

The output of each of the oxygen sensors 20, 22, and 26 sharply changes according to whether the air-fuel ratio of the exhaust gas is richer or leaner than the stoichiometric air-fuel ratio. Instead of the oxygen sensors 20, 22, and 26, air-fuel ratio sensors, each of which generates an output that linearly changes according to the air-fuel ratio of the exhaust gas, may be provided.

The NOx sensor 24 has the function of detecting the concentration of NOx in the exhaust gas. The NOx sensor 24 will be described in detail later.

A temperature sensor 28 is provided in the NOx catalyst 18. The temperature sensor 28 detects the (bed) temperature TCAT of the NOx catalyst 18. In the invention, instead of directly detecting the temperature TCAT of the NOx catalyst 18 using the temperature sensor 28, the temperature TCAT of the NOx catalyst 18 may be estimated based on the temperature of the exhaust gas detected by an exhaust-gas temperature sensor provided upstream or downstream of the NOx catalyst 18. Alternatively, the temperature TCAT of the NOx catalyst 18 may be estimated based on the operating state of the internal combustion engine 10.

The internal combustion engine 10 is connected to an intake system (not shown) to which air is taken, and which distributes the air to the cylinders.

The system according to the first embodiment includes an ECU (Electronic Control Unit) 30. The ECU 30 is connected to sensors that detect an engine speed NE, an intake air pressure PM, an intake air amount GA, a throttle-valve opening amount TH, and the like, in addition to the above-described sensors. The ECU 30 is also electrically connected to actuators for a fuel injector, an ignition plug, a throttle valve, and the like.

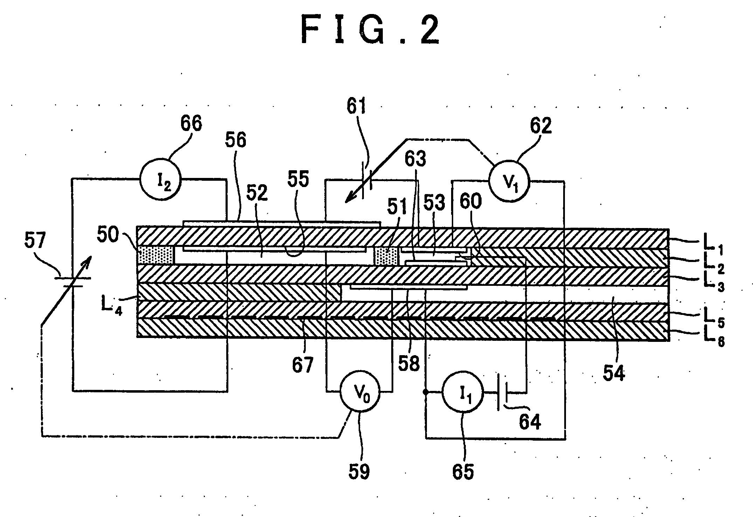

FIG 2 is a cross sectional view showing the configuration of the sensor portion of the NOx sensor 24 provided in the system shown in FIG. 1. As described below, the NOx sensor 24 in the embodiment is a limiting current NOx sensor. As shown in FIG. 2, the sensor portion of the NOx sensor 24 includes six oxygen ion-conducting solid electrolyte layers made of, for example, zirconium oxide. The six solid electrolyte layers are stacked. The six solid electrolyte layers include a first layer $L_1$, a

second layer $L_2$, a third layer $L_3$, a fourth layer $L_4$, a fifth layer $L_5$, and a sixth layer $L_6$ in a direction from the upper portion to the lower portion of the sensor portion.

For example, a first diffusion-controlling member 50 and a second diffusion-controlling member 51, which are porous, are disposed between the first layer $L_1$ and the third layer $L_3$. A first chamber 52 is formed between the diffusion-controlling members 50 and 51. A second chamber 53 is formed between the second diffusion-controlling member 51 and the second layer $L_2$. An atmospheric chamber 54 is formed between the third layer $L_3$ and the fifth layer $L_5$. The atmospheric chamber 54 is open to outside air. The outer end surface of the first diffusion-controlling member 50 contacts the exhaust gas. Accordingly, the exhaust gas flows into the first chamber 52 via the first diffusion-controlling member 50. Thus, the first chamber 52 is filled with the exhaust gas.

A negative electrode-side first pump electrode 55 is formed on the inner surface of the first layer $L_1$, which faces the first chamber 52. A positive electrode-side first pump electrode 56 is formed on the outer surface of the first layer $L_1$. A first pump voltage source 57 applies a voltage between the first pump electrodes 55 and 56. When the voltage is applied between the first pump electrodes 55 and 56, the oxygen contained in the exhaust gas in the first chamber 52 contacts the negative electrode-side first pump electrode 55, and thus the oxygen is converted into oxygen ions. The oxygen ions flow in the first layer $L_1$ toward the positive electrode-side first pump electrode 56. Accordingly, the oxygen contained in the exhaust gas in the first chamber 52 moves in the first layer $L_1$, and then the oxygen is drawn to the outside. The amount of oxygen drawn to the outside increases as the voltage of the first pump voltage source 57 increases.

A reference electrode 58 is formed on the inner surface of the third layer $L_3$, which faces the atmospheric chamber 54. When there is a difference in the oxygen concentration between the both sides of the oxygen ion-conducting solid electrolyte layer, the oxygen ions move in the solid electrolyte layer, from the side where the oxygen concentration is high toward the side where the oxygen concentration is low. In the example shown in FIG 2, the oxygen concentration in the atmospheric chamber 54 is higher than the oxygen concentration in the first chamber 52. Therefore, when the oxygen in the atmospheric chamber 54 contacts the reference electrode 58, the oxygen receives electric charges, and thus the oxygen is converted to oxygen ions. The oxygen ions move in the third layer $L_3$, the second layer $L_2$, and the first layer $L_1$, and the oxygen ions release the electric charges in the negative electrode-side first pump electrode 55. As a result, a voltage $V_0$ shown by reference numeral 59 occurs between the reference electrode 58 and the negative electrode-side first pump electrode 55. The voltage $V_0$ is proportional to the difference between the oxygen concentration in the atmospheric chamber 54 and the oxygen concentration in the first chamber 52.

In the example shown in FIG 2, the voltage of the first pump voltage source 57 is controlled through feedback so that the voltage $V_0$ matches a voltage that occurs when the oxygen concentration in the first chamber 52 is I p.p.m. That is, the oxygen in the first chamber 52 is drawn to the outside via the first layer $L_1$ so that the oxygen concentration in the first chamber 52 is 1 p.p.m. Thus, the oxygen concentration in the first chamber 52 is maintained at 1 p.p.m.

The negative electrode-side first pump electrode 55 is made of material that has low ability to reduce NOx, for example, alloy of gold Au and platinum Pt. Accordingly, the NOx contained in the exhaust gas is hardly reduced in the first chamber 52. Thus, the NOx passes through the second diffusion-controlling member 51, and flows into the second chamber 53. A negative electrode-side second pump electrode 60 is formed on the inner surface of the first layer $L_1$, which faces the second chamber 53. A second pump voltage source 61 applies a voltage between the negative electrode-side second pump electrode 60 and the positive electrode-side first pump electrode 56. When the voltage is applied between the pump electrodes 60 and 56, the oxygen contained in the exhaust gas in the second chamber 53 contacts the negative electrode-side second pump electrode 60, and thus the oxygen is converted to the oxygen ions. The oxygen ions flow in the first layer $L_1$ toward the positive electrode-side first pump electrode 56. Accordingly, the oxygen contained in the exhaust gas in the second chamber 53 moves in the first layer $L_1$, and then the oxygen is drawn to the outside The amount of oxygen drawn to the outside increases as the voltage of the second pump voltage source 61 increases.

As described above, when there is a difference in the oxygen concentration between the both sides of the oxygen ion-conducting solid electrolyte layer, the oxygen ions move in the solid electrolyte layer, from the side where the oxygen concentration is high toward the side where the oxygen concentration is low. In the example shown in FIG 2, the oxygen concentration in the atmospheric chamber 54 is higher than the oxygen concentration in the second chamber 53. Therefore, when the oxygen in the atmospheric chamber 54 contacts the reference electrode 58, the oxygen receives electric charges, and thus the oxygen is converted to oxygen ions. The oxygen ions move in the third layer $L_3$, the second layer $L_2$, and the first layer $L_1$, and the oxygen ions release the electric charges in the negative electrode-side second pump electrode 60. As a result, a voltage $V_1$ shown by reference numeral 62 occurs between the reference electrode 58 and the negative electrode-side second pump electrode 60. The voltage $V_1$ is proportional to the difference between the oxygen concentration in the atmospheric chamber 54 and the oxygen concentration in the second chamber 53.

In the example shown in FIG 2, the voltage of the second pump voltage source 61 is controlled through feedback so that the voltage $V_1$ matches a voltage that occurs when the oxygen concentration in the second chamber 53 is 0.01 p.p.m. That is, the oxygen in the second chamber 53 is drawn to the outside via the first layer $L_1$ so that the oxygen concentration in the second chamber 53 is 0.01 p.p.m. Thus, the oxygen concentration in the second chamber 53 is maintained at 0.01 p.p.m.

The negative electrode-side second pump electrode 60 is made of material that has low ability to reduce NOx, for example, alloy of gold Au and platinum Pt. Accordingly, when the NOx contained in the exhaust gas contacts the negative electrode-side second pump electrode 60, the NOx is hardly reduced. A negative electrode-side pump electrode 63 for detecting NOx is formed on the inner surface of the third layer $L_3$, which faces the second chamber 53. The negative electrode-side pump electrode 63 is made of material that has high ability to reduce NOx, for example, rhodium Rh or platinum Pt. Accordingly, the NOx in the second chamber 53, mostly NO, is decomposed to $N_2$ and $O_2$ in the negative electrode-side pump electrode 63. A constant voltage 64 is applied between the negative electrode-side pump electrode 63 and the reference electrode 58. Accordingly, $O_2$ generated by decomposing NO in the negative electrode-side pump electrode 63 is converted to oxygen ions, and the oxygen ions move in the third layer $L_3$ toward the reference electrode 58. At this time, an electric current $I_1$ shown by reference numeral 65 flows between the negative electrode-side pump electrode 63 and the reference electrode 58. The electric current $I_1$ is proportional to the amount of oxygen ions.

As described above, NOx is hardly reduced in the first chamber 52. Also, there is little oxygen in the second chamber 53. Accordingly, the electric current $I_1$ is proportional to the concentration of NOx contained in the exhaust gas. Thus, the concentration of NOx in the exhaust gas is detected based on the electric current $I_1$. Hereinafter, the electric current $I_1$ will be referred to as "output of the NOx sensor 24".

As the concentration of oxygen in the exhaust gas becomes higher, that is, as the air-fuel ratio becomes leaner, the amount of oxygen drawn from the first chamber 52 to the outside becomes larger, and therefore an electric current $I_2$ shown by reference numeral 66 becomes larger. Accordingly, the air-fuel ratio of the exhaust gas is detected based on the electric current $I_2$. Thus, the NOx sensor 24 in this embodiment functions also as an air-fuel ratio sensor that detects the air-fuel ratio. Hereinafter, the electric current $I_2$, which is output from the NOx sensor 24 to indicate the air-fuel ratio, will be referred to as "A/F output of the NOx sensor 24".

An electric heater 67, which heats the sensors portion of the NOx sensor 24, is disposed between the fifth layer $L_5$ and the sixth layer $L_6$. The electric heater 67 heats the sensor portion of the NOx sensor 24 at 700°C to 800°C.

The NOx sensor used in the invention is not limited to the above-described limiting current sensor.

The other type of sensor, such as a mixed potential sensor, may be used. Also, the NOx sensor used in the invention may not function as the air-fuel ratio sensor In this case, instead of the oxygen sensors 20 and 22, air-fuel ratio sensors may be provided to detect the air-fuel ratio of the exhaust gas flowing into the NOx catalyst 18. Alternatively, the air-fuel ratio of the exhaust gas flowing into the NOx catalyst 18 may be calculated based on the intake air amount GA detected by an airflow meter (not shown) and the fuel injection amount.

[Operation in the first embodiment] When the internal combustion engine 10 operates in a predetermined operating state, the air-fuel mixture at a lean air-fuel ratio is burned. When the internal combustion engine 10 operates at a lean air-fuel ratio, the start catalysts 14 and 16 cannot purify NOx. Therefore, the NOx is temporarily stored in the NOx catalyst 18. When the NOx is stored in the NOx catalyst 18, the ECU 30 executes a rich spike to temporarily change the combustion air-fuel ratio in the internal combustion engine from a lean air-fuel ratio to a rich air-fuel ratio, or the stoichiometric air-fuel ratio.

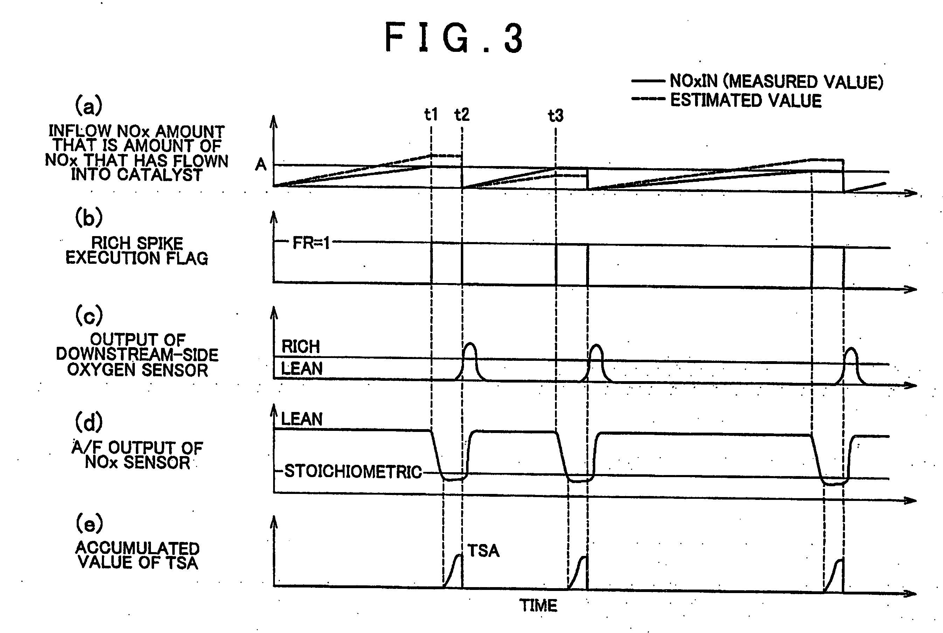

FIG. 3 is a timing chart explaining operation in the first embodiment. Hereinafter, the operation in the first embodiment will be described with reference to FIG. 3. In FIG. 3, the horizontal axis indicates an elapsed time after a previous rich spike is finished, and the combustion air-fuel ratio in the internal combustion engine 10 is returned to a lean air-fuel ratio. FIG 3 shows the operation including three rich spikes executed thereafter. Because the same rich spike operation is executed three times, the first rich spike operation in FIG. 3 will be described.

In FIG 3(a), the solid line shows the measured value of the amount of NOx that has flown into the NOx catalyst 18 (hereinafter, the amount of NOx that has flown into the NOx catalyst 18 will be referred to as "inflow NOx amount", and the measured value of the inflow NOx amount will be denoted by "NOxIN"). The inflow NOx amount NOxIN is actually measured based on the output of the NOx sensor 24. The ECU 30 calculates the inflow NOx amount NOxIN by accumulating a value obtained by multiplying the output of the NOx sensor 24 (i.e., the NOx concentration) by the amount of exhaust gas flowing into the NOx catalyst 18. The amount of exhaust gas flowing into the NOx catalyst 18 may be calculated based on, for example, the intake air amount GA detected by an airflow meter (not shown). When the internal combustion engine 10 operates at a rich air-fuel ratio that is richer than the stoichiometric air-fuel ratio, or at the stoichiometric air-fuel ratio, the ECU 30 resets the inflow NOx amount NOxIN thereafter.

In FIG 3(a), the dashed line shows the estimated value of the inflow NOx amount (hereinafter, referred to as "estimated inflow NOx amounts, which is estimated based on the operating state of the internal combustion engine 10. The estimated inflow NOx amount will be described later.

FIG 3(c) is a graph showing the output of the downstream-side oxygen sensor 26 positioned downstream of the NOx catalyst 18. FIG. 3(d) is a graph showing the A/F output of the NOx sensor 24. That is, FIG 3 (d) shows the air-fuel ratio of the exhaust gas flowing into the NOx catalyst 18. When the internal combustion engine 10 operates at a lean air-fuel ratio, the exhaust gas at a lean air-fuel ratio flows in the exhaust passage 12. Therefore, when the internal combustion engine 10 operates at a lean air-fuel ratio, the downstream-side oxygen sensor 26 generates a lean output indicating that the air-fuel ratio is lean, and the NOx sensor 24 generates the A/F output in accordance with a target lean air-fuel ratio in the internal combustion engine 10.

As shown in FIG 3(a), when the internal combustion engine 10 operates at a lean air-fuel ratio, the inflow NOx amount NOxIN monotonously increases. Then, when the inflow NOx amount NOxIN reaches a predetermined value A, the rich spike is started (at time point t1). FIG 3(b) is a graph showing the state of a rich spike execution flag FR. When the rich spike is being executed, the rich spike execution flag FR is set to 1. When the rich spike is not being executed, the rich spike execution flag FR is set to 0.

When the rich spike is started, the combustion air-fuel radio in the internal combustion engine 10 changes from a lean air-fuel ratio to a rich air-fuel ratio. Accordingly, the exhaust gas at the rich air-fuel ratio, which contains a large amount of reducing agent such as HC and CO, flow into the start catalysts 14 and 16. Then, after all of the oxygen stored in the start catalysts 14 and 16 is consumed, the exhaust gas at the rich air-fuel ratio starts to flow to an area downstream of the start catalysts 14 and 16. Thus, as shown in FIG. 3(d), the A/F output of the NOx sensor 24 changes from a lean output indicating that the air-fuel ratio is lean, to a rich output indicating that the air-fuel ratio is rich.

When the internal combustion engine 10 operates at a lean air-fuel ratio, oxygen is quickly stored in the oxygen storage material of the NOx catalyst 18 up to the capacity. Therefore, when the rich spike is started, oxygen has been stored in the NOx catalyst 18 up to oxygen storage capacity OSC.

The rich spike is started under the condition that the inflow NOx amount NOxIN reaches the predetermined value A. The predetermined value A is set so that the rich spike is started before the amount of NOx stored in the NOx catalyst 18 reaches the NOx storage capacity NSC. Accordingly, when the rich spike is started, the amount of NOx stored in the NOx catalyst 18 is less than the NOx storage capacity NSC.

When the exhaust gas at a rich air-fuel ratio starts to flow to the area downstream of the start catalysts 14 and 16, and the exhaust gas, which contains the reducing agent such as HC and CO, flows into the NOx catalyst 18, the oxygen and NOx stored in the NOx catalyst 18 react with the reducing agent, and thus the oxygen and NOx are consumed. During the period in which the oxygen and NOx are consumed, the output of the downstream-side oxygen sensor 26 remains the lean output. When all of the oxygen and NOx stored in the NOx catalyst 18 is consumed, the exhaust gas at the rich air-fuel ratio, which contains the reducing agent, starts to flow to the area downstream of the NOx catalyst 18. Thus, the output of the downstream-side oxygen sensor 26 changes from the lean output to the rich output (at time point t2). At this time point, the current rich spike is finished.

Thus, the amount of reducing agent, which flows into the NOx catalyst 18 during the period from when the rich spike is started until when the output of the downstream-side oxygen sensor 26 changes from the lean output to the rich output, is correlated with both of the amount of oxygen stored in the NOx catalyst 18 before the rich spike is started (hereinafter, referred to as "oxygen storage amount OSA"), and the amount of NOx stored in the NOx catalyst 18 before the rich spike is started (hereinafter, referred to as "NOx storage amount NSA"). In the embodiment, a value equivalent to the sum of the oxygen storage amount OSA and the NOx storage amount NSA will bet referred to as "total storage amount TSA". The total storage amount TSA will be described below.

The total storage amount TSA is the sum of a value obtained by converting the NOx storage amount NSA to the amount of oxygen, and the oxygen storage amount OSA. In the system in the embodiment, the total storage amount TSA is determined based on the amount of reducing agent that flows into the NOx catalyst 18.

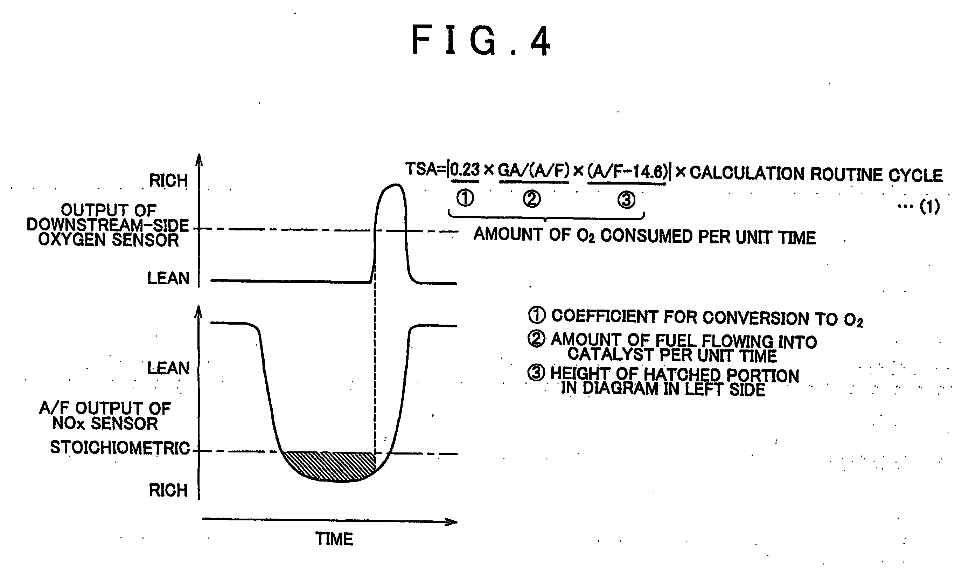

FIG. 4 describes a method used by the ECU 30 to calculate the total storage amount TSA. The diagram in the left side of FIG. 4 is an enlarged diagram showing a portion of FIG 3(c) and FIG 3(d) where the rich spike is executed. The reducing agent that flows into the NOx catalyst 18 is unburned fuel in the exhaust gas. Therefore, the amount of reducing agent that flows into the NOx catalyst 18 is calculated based on a hatched portion in the graph showing the A/F output of the NOx sensor 24 in FIG 4. Accordingly, the total storage amount TSA is calculated using the equation (1) in the right side of FIG 4. In the equation (1), "GA" represents the amount of air taken into the internal combustion engine 10, "A/F" represents the air-fuel ratio of the exhaust gas flowing into the NOx catalyst 18, and "14.6" is the stoichiometric air-fuel ratio. The value of "GA" is determined based on, for example, the output of the airflow meter. The value of "A/F" is determined based on the A/F output of the NOx sensor 24. Alternatively, the value of "A/F" may be determined based on the intake air amount GA and the fuel injection amount.

The ECU 30 performs calculation using the equation (1) each time a predetermined calculation routine is executed. The value of TSA calculated using the equation (1) indicates the amount of oxygen corresponding to the amount of reducing agent that flows into the NOx catalyst 18 in one cycle in which the predetermined calculation routine is executed. Then, the ECU 30 accumulates the value of TSA calculated using the equation (1) after the time point at which the A/F output of the NOx sensor 24 changes from the lean output to the rich output. The accumulated value of TSA at a time point indicates the amount of oxygen corresponding to the amount of reducing agent that has flown into the NOx catalyst 18 up to the time point. FIG 3(e) is a graph showing the accumulated value of TSA.

As described above, when the output of the downstream-side oxygen sensor 26 changes from the lean output to the rich output (at time point t2), it is determined that all of the oxygen and NOx stored in the NOx catalyst 18 is consumed. Accordingly, the accumulated value of TSA at this time point is equivalent to the total storage amount TSA. That is, in the example shown in FIG 3, the accumulated value of TSA at time point 12 is equivalent to the total storage amount TSA before the first rich spike is started. When the output of the downstream-side oxygen sensor 26 changes from the lean output to the rich output, the rich spike is finished. After the rich spike is finished, the inflow NOx amount NOxIN and the accumulated value of TSA are reset.

The first rich spike in FIG 3 has been described. After the rich spike is finished, the combustion air-fuel ratio in the internal combustion engine 10 is returned to the target lean air-fuel ratio. As a result, the inflow NOx amount NOxIN increases again. When the inflow NOx amount NOxIN reaches the predetermined value A, the rich spike is executed again (at time point t3).

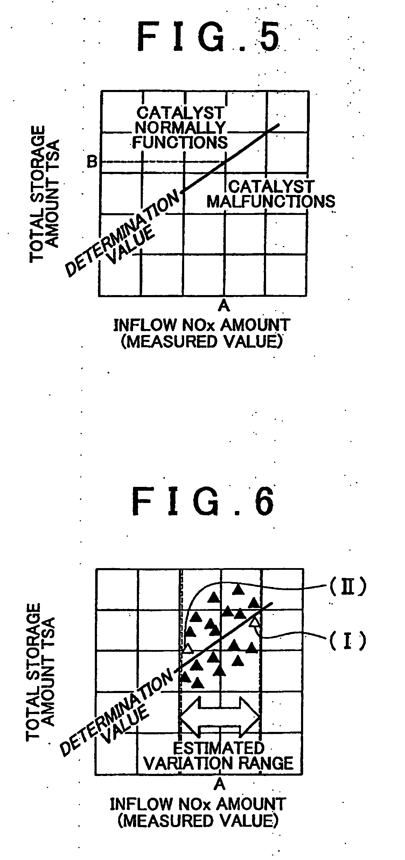

FIG 5 shows the relation between a determination value used to determine the deterioration of the NOx catalyst 18 based on the total storage amount TSA, and the inflow NOx amount NOxIN at the start of the rich spike. As shown in FIG. 5, the determination value is set to increase as the inflow NOx amount increases, for the reason described below.

As described above, when the internal combustion engine 10 operates at a lean air-fuel ratio, oxygen is quickly stored in the NOx catalyst 18 up to the capacity Therefore, whenever the rich spike is started, oxygen has been stored in the NOx catalyst 18 up to the capacity. Accordingly, it is considered that the oxygen storage amount OSA in the total storage amount TSA is equal to the oxygen storage capacity OSC, regardless of the inflow NOx amount NOxIN at the start of the rich spike.

In contrast, it is considered that the NOx catalyst 18 captures a substantially constant proportion of NOx flowing into the NOx catalyst 18. Therefore, as the inflow NOx amount NOxIN at the start of the rich spike increases, the NOx storage amount NSA in the total storage amount TSA increases in substantial proportion to the inflow NOx amount NOxIN. Taking this fact into account, the determination value used to determine the deterioration of the NOx catalyst 18 is set to increase as the inflow NOx amount increases.

As described above, in the example shown in FIG 3, the rich spike is started at the time point at which the inflow NOx amount NOxIN reaches the predetermined value A. Accordingly, the determination value in this case is determined to be a value B based on the relation shown in FIG 5. That is, in the example shown in FIG 3, when the detected total storage amount TSA is equal to or above the value B, it is determined that the ability of the NOx catalyst 18 is normal, and the NOx catalyst 18 is not deteriorated.

When the detected total storage amount TSA is below the value B, it is determined that the oxygen storage amount OSA (= the oxygen storage capacity OSC) in the total storage amount TSA is decreased, or the NOx storage amount NSA in the total storage amount TSA is decreased. When the oxygen storage amount OSC is decreased, it is determined that the oxygen storage ability of the NOx catalyst 18 is deteriorated. Also, when the NOx storage amount NSA is decreased, the proportion of the NOx captured by the NOx catalyst 18 in all of the NOx flowing into the NOx catalyst 18 is decreased. Therefore, when the NOx storage amount NSA is decreased, it is determined that the NOx storage ability of the NOx catalyst 18 is deteriorated. Accordingly, when the total storage amount TSA is below the value B, it is determined that the ability of the NOx catalyst 18 is abnormal, and the NOx catalyst 18 is deteriorated:

Thus, the determination value used to determine the deterioration of the NOx catalyst 18 varies according to the inflow NOx amount NOxIN at the start of the rich spike. Therefore, it is important to accurately determine the inflow NOx amount NOxIN to determine the deterioration of the NOx catalyst 18 with high accuracy. According to the invention, because the NOx sensor 24 is provided upstream of the NOx catalyst 18, the inflow NOx amount NOxIN is actually measured. Therefore, the inflow NOx amount NOxIN is accurately determined. Thus, the deterioration of the NOx catalyst 18 is determined with high accuracy.

[Comparative Example] Hereinafter, a deterioration monitoring method in a comparative example will be described to facilitate understanding of the advantageous effects of the invention. In the deterioration monitoring method in the comparative example, the inflow NOx amount is estimated based on the operating state of the internal combustion engine 10. That is, in the comparative example, the amount of NOx discharged from the internal combustion engine 10 per unit time at each load and at each rotational speed of the internal combustion engine 10 is empirically determined in advance. Thus, the experimental data is obtained, and stored in the ECU 30. The ECU 30 calculates (the estimated value of) the amount of generated NOx based on the experimental data using the current load and current rotational speed, and accumulates the amount of generated NOx, at time intervals. The accumulated value is the estimated inflow NOx amount.

The experimental data, based on which the estimated inflow NOx amount is determined, is obtained during the steady operation of the internal combustion engine 10. However, when the amount of generated NOx is estimated, the actual load and actual rotational speed momentarily change. The estimated inflow NOx amount has a small error due to this influence. Also, it is considered that an actual NOx discharge characteristic may deviate from the above-described experimental data due to variation among individual internal combustion engines, and variation with time. The estimated inflow NOx amount also has an error due to this influence. Therefore, as shown by the dashed line in FIG. 3(a), the estimated inflow NOx amount is larger or smaller than the actual inflow NOx amount NOxIN.

In the comparative example, the rich spike is started at the time point at which the estimated inflow NOx amount reaches the predetermined value A. However, the actual inflow NOx amount at this time point is larger or smaller than the predetermined value A, due to the above-described error. In FIG 6, the horizontal axis indicates the actual inflow NOx amount at the start of the rich spike in the comparative example, which is measured using a highly-responsive NOx analyzer. The vertical axis indicates the detected total storage amount TSA. As evident from the experimental result shown in FIG 6, in the comparative example, the actual inflow NOx amount at the start of the rich spike varies in a range around the predetermined value A due to the error of the estimated inflow NOx amount.

As described above, when the total storage amount TSA is above the determination value line in FIG. 6, the NOx catalyst 18 normally functions. When the total storage amount TSA is below the determination value line in FIG 6, the NOx catalyst 18 malfunctions. Accordingly, when the detection result is shown by a point (I) in FIG 6, the NOx catalyst 18 malfunctions. When the detection result is shown by a point (II) in FIG 6, the NOx catalyst 18 normally functions.

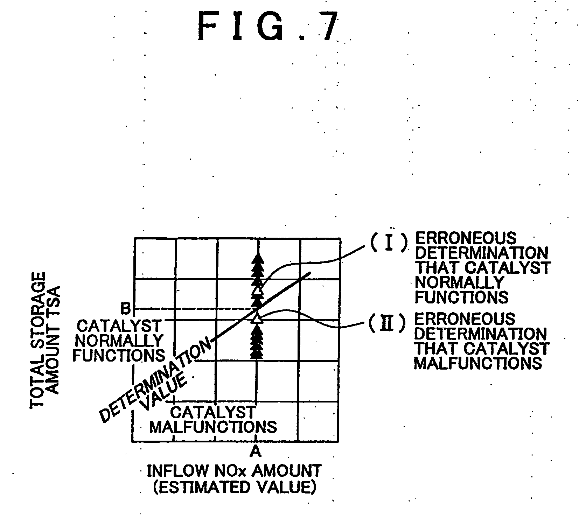

However, when the ECU 30 actually determines the deterioration of the NOx catalyst 18 using the method in the comparative example, because the actual inflow NOx amount is unknown, the inflow NOx amounts at all the points in FIG 6 are regarded as being equal to the predetermined value A. In FIG 7, all the points in FIG 6 are projected on a straight line showing that the inflow NOx amount is equal to the predetermined value A. Points (I) and (II) in FIG 7 correspond to the points (I) and (II) in FIG 6. In the comparative example, the deterioration of the NOx catalyst 18 is determined based on the detection results as shown in FIG 7. That is, when the total storage amount TSA is equal to or above the value B in FIG 7, it is determined that the NOx catalyst 18 normally functions. When the total storage amount TSA is below the value B in FIG 7, it is determined that the NOx catalyst 18 malfunctions. Therefore, when the detection result is shown by the point (I) in FIG. 6, and therefore, the NOx catalyst 18 malfunctions, it may be erroneously determined that the NOx catalyst 18 normally functions. When the detection result is shown by the point (II) in FIG 6, and therefore, the NOx catalyst 18 normally functions, it may be erroneously determined that the NOx catalyst 18 malfunctions. Thus, in the comparative example, an erroneous determination as to the deterioration of the NOx catalyst 18 may be made due to the error of the estimated inflow NOx amount.

In contrast, in the invention, because the NOx sensor 24 is provided upstream of the NOx catalyst 18, the inflow NOx amount is actually measured. Therefore, the inflow NOx amount is accurately determined. Therefore, the above-described erroneous determination is not made. Thus, the deterioration of the NOx catalyst 18 is determined with high accuracy.

In the invention, the NOx sensor 24 does not need to be provided downstream of the NOx catalyst 18. The deterioration of the NOx catalyst 18 is determined with high accuracy, by providing the Now sensor 24 only upstream of the NOx catalyst 18. Therefore, as compared to a system in which the NOx sensors are provided upstream and downstream of the NOx catalyst 18, the number of the expensive NOx sensors is reduced, and therefore, the manufacturing cost is reduced. Particularly, in the embodiment, because the NOx sensor 24 is used also as an air-fuel ratio sensor, the manufacturing cost is further reduced.

[Specific processes in the first embodiment]

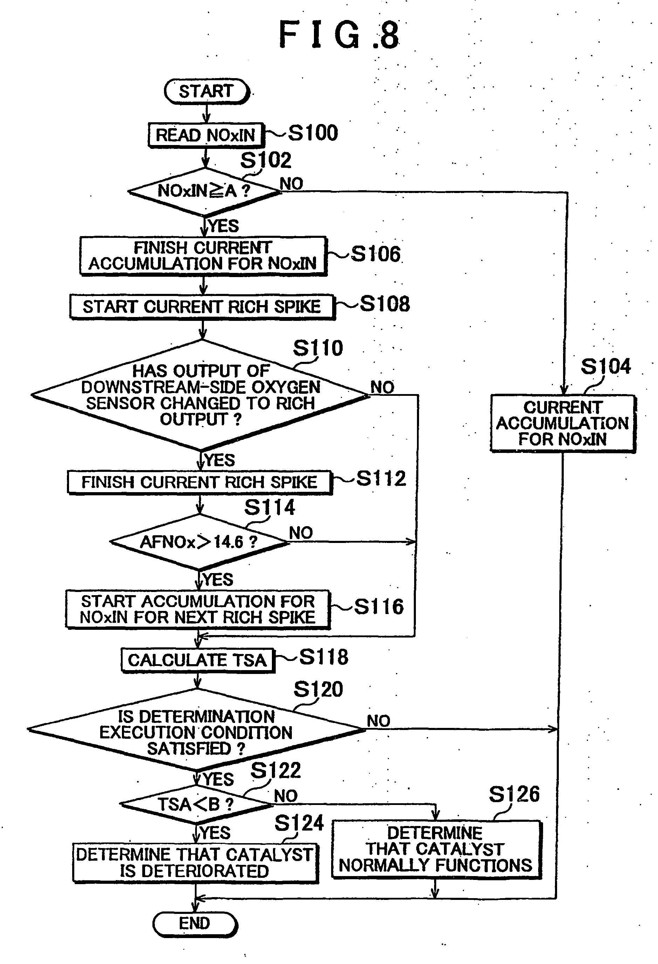

FIG 8 is a flowchart of a routine executed by the ECU 30 in the embodiment to determine the deterioration of the NOx catalyst 18, using the above-described method. The routine is repeatedly executed at predetermined time intervals.

In the routine shown in FIG 8, first, the inflow NOx amount NOxIN calculated based on the output of the NOx sensor 24 is read (step 100). Next, it is determined whether the inflow NOx amount NOxIN has reached the predetermined value A (step 102). When it is determined that the inflow NOx amount NOxIN has not reached the predetermined value A, the inflow NOx amount NOxIN is updated by accumulating the output of the NOx sensor 24 (step 104). Then, the current process cycle ends.

When it is determined that the inflow NOx amount NOxIN has reached the predetermined value A in step 102, the current accumulation for the inflow NOx amount NOxIN is finished (step 106), and then the rich spike is started (step 108).

When the rich spike is started, it is determined whether the output of the downstream-side oxygen sensor 26 has changed to the rich output (step 110). When the output of the downstream-side oxygen sensor 26 has not changed to the rich output, the accumulated value of TSA is updated (i.e., the value of TSA is accumulated) (step 118). The accumulated value of TSA is calculated using the method that has been described with reference to FIG 4. Next, it is determined whether a determination execution condition for executing the determination as to the deterioration of the NOx catalyst 18 is satisfied (step 120). More specifically, it is determined whether each of the following conditions (1) to (3) is satisfied. That is, the determination execution condition includes the condition (1) that the rich spike has been finished; the condition (2) that the operating condition (for example, the operating condition indicated by the engine speed NE, the throttle-valve opening amount TH, and the intake air amount GA) under which the rich spike is executed is in a predetermined range; and the condition (3) that the temperature TCAT of the NOx catalyst 18 when the rich spike is executed is in a predetermined range.

The condition (2) is set so that the deterioration of the NOx catalyst 18 is determined based on only the data obtained when the rich spike is executed under the predetermined operating condition where sharp acceleration or deceleration is not performer, to reliably prevent an erroneous determination. The condition (3) is set to prevent an erroneous determination due to the influence of the temperature of the NOx catalyst 18. That is, the ability of the NOx catalyst 18 varies according to the temperature of the NOx catalyst 18. Accordingly, the conditions (3) is set so that the deterioration of the NOx catalyst 18 is determined based on only the data obtained when the rich spike is executed in a temperature range where the ability of the NOx catalyst 18 is regarded as being constant.

When the output of the downstream-side oxygen sensor 26 has not changed to the rich output, the rich spike continues to be executed. In this case, the condition (1) is not satisfied. Therefore, a negative determination is made in step 120. When a negative determination is made in step 120, the current process cycle ends.

When the rich spike continues to be executed, the output of the downstream-side oxygen sensor 26 eventually changes to the rich output. Therefore, an affirmative determination is made in step 110. Then, the current rich spike is finished (step 112). When the rich spike is finished, it is determined whether an air-fuel ratio AFNOx detected by the NOx sensor 24 has changed to a lean air-fuel ratio. That is, it is determined whether the air-fuel ratio AFNOx is above 1.4.6 (AFNOx > 14.6) (step 114). When the air-fuel ratio AFNOx is above 14.6 (AFNOx > 14.6), the accumulation for the inflow NOx amount NOxIN is started to determine a timing at which the next rich spike should be started (step 116).

Subsequently, the accumulated value of TSA is updated (i.e., the value of TSA is accumulated) (step 118). As described above, the accumulated value of TSA at the end of the rich spike is equivalent to the total storage amount TSA. Next, it is determined whether the above-described determination execution condition is satisfied (step 120). When it is determined that the determination execution condition is satisfied, the determination as to the deterioration of the NOx catalyst 18 is executed. That is, as described above with reference to FIG 5, the total storage amount TSA is compared with the determination value B (step 122). When the total storage amount TSA is below the value B (TSA < B), it is determined that the NOx catalyst 18 is deteriorated (step 124). When the total storage amount TSA is equal to or above the value B (TSA ≥ B), it is determined that the NOx catalyst 18 normally functions (step 126).

In the first embodiment, the NOx catalysts 18 may be regarded as NOx catalyst" according to the invention. The NOx sensor 24 may be regarded as "NOx detection means" according to the invention. The downstream-side oxygen sensor 26 may be regarded as "exhaust gas sensor" according to the invention. When the ECU 30 executes steps 100, 104, 106, and 116, "the inflow NOx amount calculation means" according to the invention may be implemented. When the ECU 30 executes step 108, "the rich spike means" according to the invention may be implemented. When the ECU 30 executes step 118, "the total storage amount calculation means" according to the invention may be implemented. When the ECU 30 executes steps 122, 124, and 126, "the diagnostic means" according to the invention may be implemented.

Second embodiment

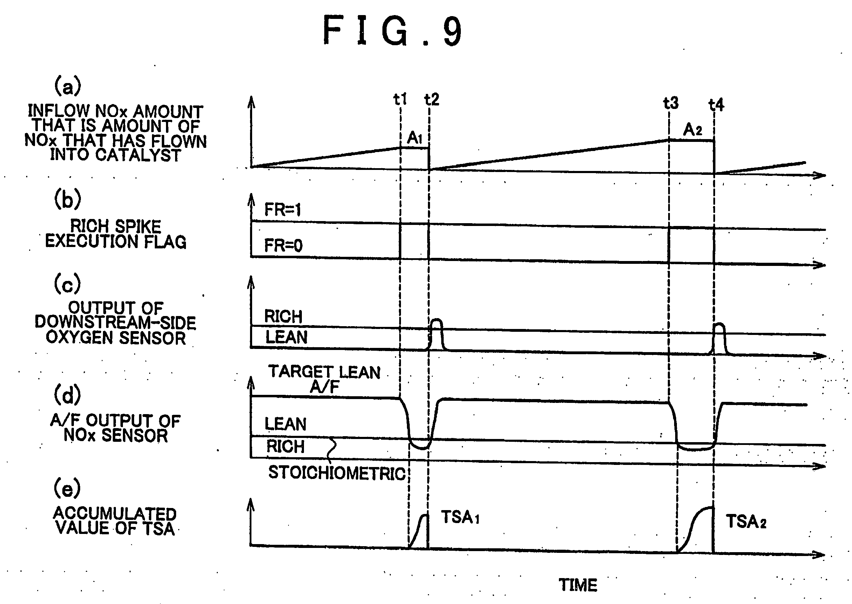

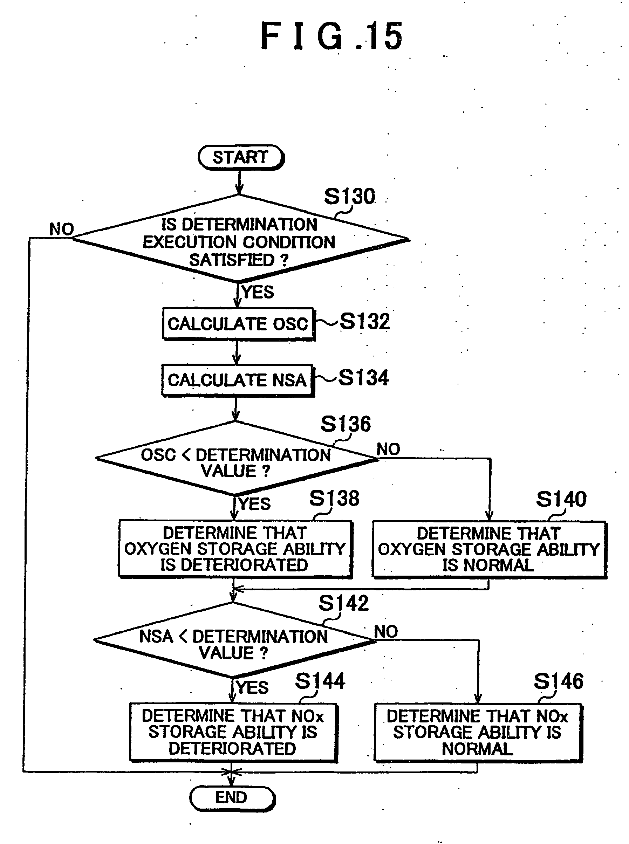

Next, a second embodiment of the invention will be described with reference to FIG. 9 to FIG. 15. The difference between the second embodiment and the first embodiment will be mainly described: The description of the same portions as those in the first embodiment will be simplified or omitted. The second embodiment is realized when the same hardware configuration as that in the first embodiment is employed, and the ECU 30 executes a routine shown in FIG 15 described later.

FIG. 9 is a timing chart explaining operation in the second embodiment. The first rich spike in FIG. 9(a) is started under the condition that the inflow NOx amount NOxIN reaches a predetermined value $A_1$ (at time point t1). The second rich spike in FIG 9(a) is started under the condition that the inflow NOx amount NOxIN reaches a predetermined value $A_2$ ($A_1$ is not equal to $A_2$. In the example shown in FIG. 9(a), $A_1$ is smaller than $A_2$ ($A_1 < A_2$)) (at time point t3).

As shown in FIG 9(e), when the rich spikes are executed, the total storage amounts $TSA_1$ and $TSA_2$ are calculated in the same manner as in the first embodiment. That is, in the operation shown in FIG 9, the total storage amount $TSA_1$ at the inflow NOx amount $A_1$, and the total storage amount $TSA_2$ at the inflow NOx amount $A_2$ are detected.

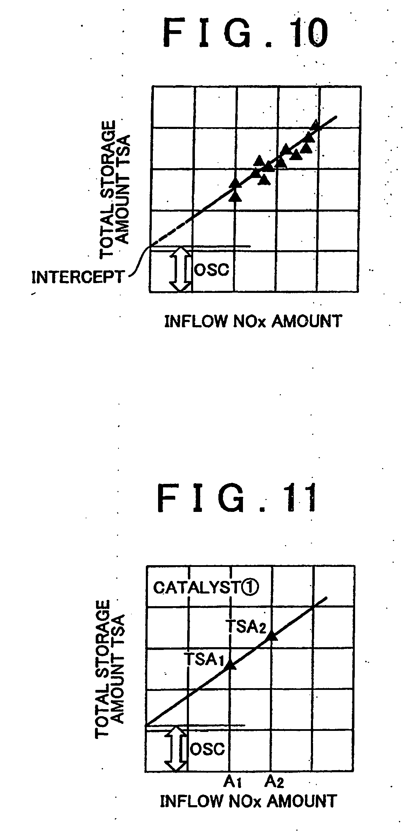

Thus, in the embodiment, a plurality of levels of the inflow NOx amount, which is the amount of NOx that has flown into the NOx catalyst 18, is set, and the total storage amount TSA at each level is detected. FIG 10 shows the results of experiments where the total storage amount TSA at each of different inflow NOx amounts is detected a plurality of times. The results of experiments are plotted on coordinate axes. In FIG. 10, the horizontal axis indicates the inflow NOx amount, and the vertical axis indicates the total storage amount TSA. The rich spikes are executed under the substantially same operating condition. As evident from FIG 10, points that show the inflow NOx amounts and the total storage amounts TSA at the rich spikes are on the substantially same straight line. This is because as the inflow NOx amount increases, the NOx storage amount NSA in the total storage amount TSA increases in substantial proportion to the inflow NOx amount, as described above.

Also, as described above, when the internal combustion engine 10 operates at a lean air-fuel ratio, oxygen is quickly stored in the NOx catalyst 18 up to the capacity. Therefore, whenever the rich spike is started, oxygen has been stored in the NOx catalyst 18 up to the oxygen storage capacity OSC. Accordingly, the oxygen storage amount OSA in the total storage amount TSA is equal to the oxygen storage capacity OSC, regardless of the inflow NOx amount.

It is considered that when the inflow NOx amount is zero, the NOx storage amount NSA is naturally zero. Therefore, in this case, it is considered that the total storage amount TSA is equal to the oxygen storage amount OSA. As evident from FIG 10, the total storage amount TSA when the inflow NOx amount is zero is determined by extrapolating a straight line that shows the relation between the inflow NOx amount and the total storage amount TSA (i.e., the straight line in FIG. 10), and determining the intercept of the straight line. That is, the intercept of the straight line is the total storage amount TSA when the inflow NOx amount is zero. According to the above-described idea, the total storage amount TSA when the inflow NOx amount is zero is equal to the oxygen storage amount OSA in the NOx catalyst 18, and equal to the oxygen storage capacity OSC of the NOx catalyst 18.

As described above, the oxygen storage amount OSA determined based on the total storage amount TSA in the NOx catalyst 18 is equal to the oxygen storage capacity OSC of the NOx catalyst 18. Therefore, in the following description, the oxygen storage amount OSA will be simply referred to as "oxygen storage capacity OSC" for the sake of convenience.

In FIG 11, the inflow NOx amounts $A_1$ and $A_2$, and the total storage amounts $TSA_1$ and $TSA_2$ at two rich spikes shown in FIG 9 are plotted on the same coordinate axes as in FIG 10. As shown in FIG 11, in the embodiment, when the total storage amount TSA is detected at least once at each of the inflow NOx amounts at least two different levels, it is possible to draw a straight line that shows the relation between the inflow NOx amount and the total storage amount TSA. Therefore, it is possible to estimate the oxygen storage capacity OSC.

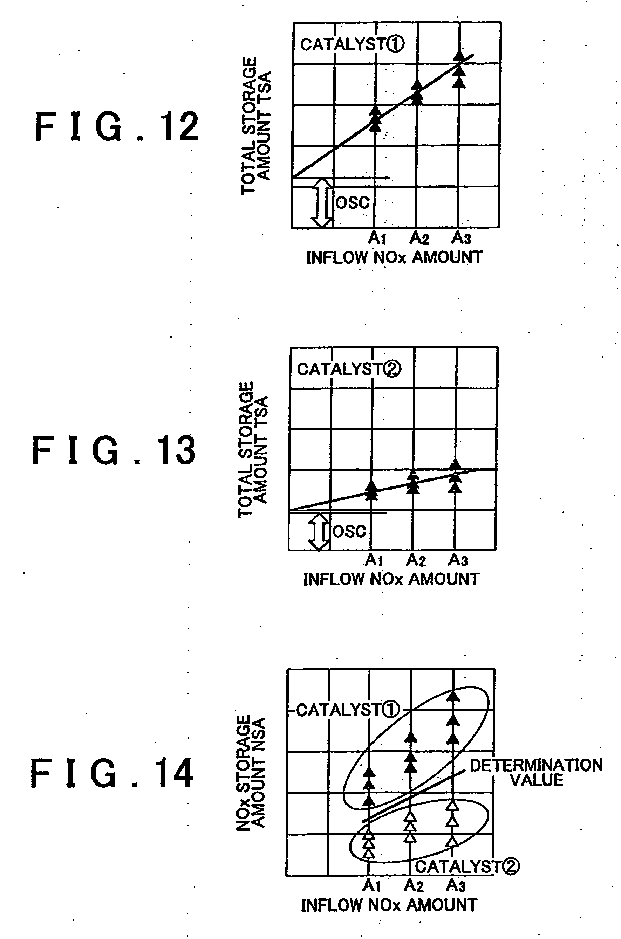

In the embodiment, the oxygen storage capacity OSC may be estimated based on the total storage amounts TSA detected at the inflow NOx amounts at at least three different levels. Also, at least two rich spikes may be executed at each of the inflow NOx amounts at different levels, and the oxygen storage capacity OSC may be estimated based on the total storage amounts TSA at the rich spikes. FIG. 12 shows the results of experiments where three rich spikes are executed and the total storage amounts TSA are detected, at each of the inflow NOx amounts ($A_1$, $A_2$, and $A_3$) at three levels. That is, in FIG 12, nine points in total are plotted on the same coordinate axes as in FIG 10.

As shown in FIG. 12, when there are at least two points, the oxygen storage capacity OSC is determined, for example, by performing linear approximation on the points using a least square method or the like to obtain a straight line that shows the relation between the inflow NOx amount and the total storage amount TSA, and extrapolating the straight line. In this case, the oxygen storage amount OSC is more accurately estimated.

Thus, in the embodiment, the oxygen storage capacity of the NOx catalyst 18 is accurately estimated without executing two rich spikes in succession. The performance of the NOx catalyst 18 when the NOx catalyst 18 is used at the stoichiometric air-fuel ratio is determined based on the oxygen storage ability. As the NOx catalyst 18 is deteriorated, the oxygen storage ability decreases. The level of the oxygen storage ability is determined based on the oxygen storage capacity OSC.

Accordingly, it is accurately determined whether the oxygen storage ability of the NOx catalyst 18 is normal (i.e., whether the oxygen storage ability of the NOx catalyst 18 is in a permissible range), for example, by setting a determination value used to determine the oxygen storage ability of the NOx catalyst 18, and comparing the oxygen storage capacity OSC estimated in the above-described manner, with the determination value.

In FIG 10 to FIG. 12, as the slope of the straight line that shows the relation between the inflow NOx amount and the total storage amount TSA increases, the proportion of the NOx captured by the NOx catalyst 18 in all of the NOx flowing into the NOx catalyst 18 increases. That is, the slope of the straight line indicates the NOx storage ability of the NOx catalyst 18 (i.e., the performance of the NOx catalyst 18 when the NOx catalyst 18 is used at a lean air-fuel ratio).

Accordingly, it is accurately determined whether the NOx storage ability of the NOx catalyst 18 is normal (i.e., whether the NOx storage ability of the NOx catalyst 18 is in a permissible range), for example, by setting a determination value used to determine the NOx storage ability of the NOx catalyst 18, and comparing the slope of the straight line that shows the relation between the inflow NOx amount and the total storage amount TSA, with the determination value.

FIG. 13 shows the results of experiments conducted in the same manner as the manner in which the experiments shown in FIG. 12 are conducted, using the NOx catalyst 18 that is more deteriorated than the NOx catalyst 18 used in the experiments shown in FIG 12. The results of the experiments are plotted on the coordinate axes. That is, the deterioration degree of the NOx catalyst 18 in FIG 13 is higher than the deterioration degree of the NOx catalyst 18 in FIG. 12. Therefore, the slope of the straight line (i.e., the NOx storage ability) and the intercept of the straight line (i.e., the oxygen storage capacity OSC) in FIG 13 are smaller than the slope of the straight line and the intercept of the straight line in FIG 12, respectively.

In FIG 14, the NOx storage amounts NSA in the results of experiments at the nine points in FIG 12 are plotted as black triangles, and the NOx storage amounts NSA in the results of experiments at the nine points in FIG 13 are plotted as white triangles, on the coordinate axes. The horizontal axis indicates the inflow NOx amount, and the vertical axis indicates the NOx storage amount NSA.

The NOx storage amount NSA is calculated based on the total storage amount TSA and the oxygen storage capacity OSC, using the following equation.

$$NSA = (TSA - OSC) \times 46/32 \quad \ldots(2)$$

In the equation (2), "46/32" is a coefficient for conversion from $O_2$ to $NO_2$.

When the determination value is set as shown by the inclined straight line in FIG 14, all the NOx storage amounts NSA at the nine points relating to the NOx catalyst 18 that is not deteriorated in FIG 12 are above the straight line. All the NOx storage amounts NSA at the nine points relating to the NOx catalyst 18 that is deteriorated in FIG. 13 are below The straight line. Thus, the NOx storage amount NSA and the deterioration degree are accurately correlated with each other.

Accordingly, in the embodiment, it is accurately determined whether the NOx storage ability of the NOx catalyst 18 is normal (i.e., whether the NOx storage ability is in the permissible range), also by the method in which the determination value is set in advance as shown by the inclined straight line in FIG 14, and the detected NOx storage amount NSA at the detected inflow NOx amount is compared with the determination value at the detected inflow NOx amount. That is, the NOx storage ability may be determined using this method, instead of using the method in which the NOx storage ability is determined based on the slope of the straight line that shows the relation between the inflow NOx amount and the total storage amount TSA.

[Specific processes in the second embodiment]

FIG 15 is a flowchart of a routine executed by the ECU 30 in the embodiment to determine the deterioration of the NOx catalyst 18, using the above-described method. The routine is repeatedly executed at predetermined time intervals.

In the embodiment, in addition to the routine shown in FIG 15, the substantially same routine as the routine shown in FIG 8 is executed. In the routine, the rich spike is executed at each of the inflow NOx amounts

$A_1$, $A_2$, and the like at least two different levels, and the total storage amounts $TSA_1$, $TSA_2$, and the like are detected.

In the routine shown in FIG 15, first, it is determined whether the determination execution condition for executing the catalyst deterioration determination is satisfied (step 130). More specifically, it is determined whether data on the total storage amounts $TSA_1$, $TSA_2$, and the like is stored. The total storage amounts $TSA_1$, $TSA_2$, and the like relate to the rich spikes executed at the inflow NOx amounts $A_1$, $A_2$, and the like at least two different levels. That is, as described with reference to FIG. 11, when the data on at least two points required to calculate the oxygen storage capacity OSC is stored, it is determined that the determination execution condition is satisfied. The oxygen storage capacity OSC may be calculated based on the data on a predetermined number of points, which are three or more points, as shown in FIG. 12. In this case, when the data on the predetermined number of points is stored, it is determined that the determination execution condition is satisfied.

When it is determined that the determination execution condition is not satisfied in step 130, the current process cycle ends. When it is determined that the determination execution condition is satisfied, the oxygen storage capacity OSC is calculated based on the stored data (step 132). That is, the oxygen storage capacity OSC is calculated using the method that has been described with reference to FIG 11 or FIG 12. Subsequently, the NOx storage capacity NSA is calculated using the above-described equation (2) (step 134).

Next, the oxygen storage capacity OSC calculated in step 132 is compared with the predetermined value (step 136). When the oxygen storage capacity OSC is below the determination value, it is determined that the oxygen storage ability of the NOx catalyst 18 is deteriorated (step 138). When the oxygen storage capacity OSC is equal to or above the determination value, the oxygen storage ability of the NOx catalyst 18 is normal (step 140).

Subsequently, the NOx storage capacity NSA calculated in step 134 is compared with the predetermined determination value (step 142). As described with reference to FIG 14, the determination value is calculated based on the inflow NOx amount. When the NOx storage capacity NSA is less than the determination value in step 142, it is determined that the NOx storage ability of the NOx catalyst 18 is deteriorated (step 144). When the NOx storage amount NSA is equal to or above the determination value, it is determined that the NOx storage ability of the NOx catalyst 18 is normal (step 146).

In step 142, the NOx storage ability may be determined based on the slope of the straight line that shows the relation between the inflow NOx amount and the total storage amount TSA, as described above.

In the second embodiment that has been described, by providing the NOx sensor 24 upstream of the NOx catalyst 18, the inflow NOx amount is accurately determined, as in the first embodiment. Thus, the deterioration of the NOx catalyst 18 is accurately deteriorated.

Further, in the embodiment, in the processes of the routine shown in FIG. 15, it is possible to calculate each of the oxygen storage capacity OSC (oxygen storage amount OSA) and the NOx storage amount NSA in the total storage amount TSA in the NOx catalyst 18. Therefore, it is possible to separately determine the oxygen storage ability that indicates the ability when the NOx catalyst 18 is used at the stoichiometric air-fuel ratio, and the NOx storage ability that indicates the ability when the NOx catalyst 18 is used at a lean air-fuel ratio, using the oxygen storage capacity OSC, and the NOx storage amount NSA, respectively. Therefore, the deterioration of the NOx catalyst 18 is more accurately determined.

Particularly, in the embodiment, it is not necessary to execute the rich spikes in succession at a short time interval (at such a short time interval that NOx is hardly stored in the NOx catalyst 18), to obtain the above-described advantageous effects. That is, the above-described advantageous effects are obtained by executing the rich spikes at a time interval that is close to the time interval in which the ordinary rich spikes are executed. This avoids an increase in the frequency of the rich spike. Therefore, it is possible to reliably avoid a situation where, for example, fuel efficiency deteriorates, the amount of pollutants in the exhaust gas increases, or a torque shock is likely to occur due to the increase in the frequency of the rich spike.

However, in the invention, the deterioration of the NOx catalyst 18 may be determined by the method that has been described with reference to FIG 16, that is, by executing the two rich spikes in succession to determine the oxygen storage capacity OSC (oxygen storage amount OSA).

In the above-described second embodiment, when the ECU 30 executes the process in step 132, the oxygen storage amount calculation means" according to the invention may be implemented. When the ECU 30 executes the processes in steps 136, 138, and 140, "the oxygen storage ability determination means" according to the invention may be implemented. When the ECU 30 sets at least two different levels $A_1$, $A_2$, and the like of the inflow NOx amount so that the rich spikes are started under the conditions that the inflow NOx amount reaches the at least two different respective levels $A_1$, $A_2$, and the like, "the execution condition setting means" according to the inventions may be implemented. When the ECU 30 executes the process in step 134, "the NOx storage amount calculation means" according to the invention may be implemented. When the ECU 30 executes the processes in steps 142, 144, and 146, "the NOx storage ability determination means" according to the invention may be implemented.

**Claims**

**1.** A catalyst deterioration monitoring system that determines deterioration of a storage reduction NOx catalyst (18) disposed in an exhaust passage (12) for an internal combustion engine (10), **characterized by** comprising:

> NOx detection means (24), disposed upstream of the NOx catalyst (18), which generates an output in accordance with a concentration of NOx in exhaust gas;
> an exhaust gas sensor (26), disposed downstream of the NOx catalyst (18), which generates an output in accordance with an air-fuel ratio of the exhaust gas;
> inflow NOx amount calculation means (30) for calculating an inflow NOx amount that is an amount of NOx that has flown into the NOx catalyst (18), by accumulating the output of the NOx detection means (24):
>
>> rich spike means (30) for executing a rich spike that temporarily changes the air-fuel ratio of the exhaust gas discharged from the internal combustion engine (10), from a lean air-fuel ratio to a rich air-fuel ratio or a stoichiometric air-fuel ratio;
>> total storage amount calculation means (30) for calculating a total storage amount that is a sum of an oxygen storage amount that is an amount of oxygen stored in the NOx catalyst (18) before the rich spike is started, and a NOx storage amount that is an amount of NOx stored in the NOx catalyst (18) before the rich spike is started, based on the output generated by the exhaust gas sensor (26) when the rich spike is being executed; and
>> diagnostic means (30) for determining deterioration of the NOx catalyst (18) based on the inflow NOx amount and the total storage amount.

2. The catalyst deterioration monitoring system according to claim 1,
   **characterized in that** the diagnostic means (30) determines that the NOx catalyst (18) is deteriorated, when the calculated total storage amount is below a determination value for the total storage amount, which is set according to the inflow NOx amount.

3. The catalyst deterioration monitoring system according to claim 1 or 2,
   **characterized in that** the diagnostic means (30) includes oxygen storage amount calculation means (30) for calculating the oxygen storage amount in the total storage amount based on the inflow NOx amount and the total storage amount, and oxygen storage ability determination means (30) for determining oxygen storage ability of the NOx catalyst

(18) based on the oxygen storage, amount.

4. The catalyst deterioration monitoring system according to claim 3,
   **characterized in that** the oxygen storage ability determination means (30) determines that the oxygen storage ability of the NOx catalyst (18) is deteriorated, when the calculated oxygen storage amount is below a determination value for the oxygen storage amount, which is set according to the inflow NOx amount.

5. The catalyst deterioration monitoring system according to claim 3 or 4,
   **characterized by** further comprising:

> execution condition setting means (30) for setting at least two different execution conditions under each of which at least one rich spike is executed, wherein the oxygen storage amount calculation means (30) calculates the oxygen storage amount based on a relation between the inflow NOx amount and the total storage amount, which relates to at least two rich spikes that are executed under the at least two different execution conditions.

6. The catalyst deterioration monitoring system according to claim 5,
   **characterized in that** the oxygen storage amount calculation means (30) calculates a value that is equivalent to the total storage amount when the inflow NOx amount is zero, by extrapolating the relation between the inflow NOx amount and the total storage amount, which relates to the at least two rich spikes that are executed under the at least two different execution conditions that the inflow NOx amount reaches at least two different respective levels, and the oxygen storage amount calculation means (30) regards the value as the oxygen storage amount.

7. The catalyst deterioration monitoring system according to any one of claims 3 to 6, **characterized in that** the diagnostic means (30) includes NOx storage amount calculation means (30) for calculating the NOx storage amount by subtracting the oxygen storage amount from the total storage amount, and NOx storage ability determination means (30) for determining NOx storage ability of the NOx catalyst (18) based on the calculated NOx storage amount.

8. The catalyst deterioration monitoring system according to claim 7,
   **characterized in that** the NOx storage ability determination means (30) determines that the NOx storage ability of the NOx catalyst (18) is deteriorated, when the calculated NOx storage amount is below a determination value for the NOx storage amount, which is set according to the inflow NOx amount.

9. The catalyst deterioration monitoring system according to any one of claims 1 to 8, **characterized in that** the NOx detection means (24) has a function of detecting the air-fuel ratio of the exhaust gas, and the total storage amount calculation means (30) calculates the total storage amount based on the output of the exhaust gas sensor (26) and the air-fuel ratio detected by the NOx detection means (24).

10. The catalyst deterioration monitoring system according to any one of claims 1 to 9, **characterized in that** the NOx detection means (24) has a function of detecting the air-fuel ratio of the exhaust gas, and the inflow NOx amount calculation means (30) starts accumulation of the output of the NOx detection means (24) when the air-fuel ratio detected by the NOx detection means (24) changes from a rich air-fuel ratio to a lean air-fuel ratio after the rich spike is finished.

11. A catalyst deterioration monitoring method that uses a storage reduction NOx catalyst (18) disposed in an exhaust passage (12) for an internal combustion engine (10); a NOx sensor (24), disposed upstream of the NOx catalyst (18), which generates an output in accordance with a concentration of NOx in exhaust gas; and an exhaust gas sensor (26), disposed downstream of the NOx catalyst (18), which generates an output in accordance with an air-fuel ratio of the exhaust gas, **characterized by** comprising:

   calculating an inflow NOx amount (S102) that is an amount of NOx that has flown into the NOx catalyst (18), by accumulating the output of the NOx sensor (24);
   calculating a total storage amount (S118) that is a sum of an oxygen storage amount that is an amount of oxygen stored in the NOx catalyst (18) before a rich spike is started, and a NOx storage amount that is an amount of NOx stored in the NOx catalyst (18) before the rich spike is started, based on the output generated by the exhaust gas sensor (26) when the rich spike is being executed to temporarily change the air-fuel ratio of the exhaust gas discharged from the internal combustion engine (10), from a lean air-fuel ratio to a rich air-fuel ratio or a stoichiometric air-fuel ratio; and
   determining deterioration of the NOx catalyst (S122) based on the inflow NOx amount and the total storage amount.

**Patentansprüche**

1. Katalysatorverschleißüberwachungssystem, das einen Verschleiß eines in einer Abgaspassage (12) für eine Verbrennungskraftmaschine (10) angebrachten Speicherreduktions-NOx-Katalysator (18) bestimmt, **gekennzeichnet durch**:

   eine NOx-Erfassungseinrichtung (24), die stromaufwärts des NOx-Katalysators (18) angebracht ist, die eine Ausgabe gemäß einer NOx-Konzentration im Abgas erzeugt;
   einem Abgassensor (26), der stromabwärts des NOx-Katalysators (18) angebracht ist, der eine Ausgabe gemäß einem Luft-Treibstoff-Verhältnis des Abgases erzeugt;
   einer NOx-Zuflussmengenberechnungseinrichtung (30) zum Berechnen einer NOx-Zuflussmenge, die eine Menge von NOx ist, die in den NOx-Katalysator (18) geströmt ist, **durch** Akkumulieren der Ausgabe der NOx-Erfassungseinrichtung (24);
   einer Fetterhöhungseinrichtung (30) zum Ausführen einer Fetterhöhung, die temporär das Luft-Treibstoff-Verhältnis des von der Verbrennungskraftmaschine (10) ausgestoßenen Abgases von einem mageren Luft-Treibstoff-Verhältnis zu einem fetten Luft-Treibstoff-Verhältnis oder einem stöchiometrischen Luft-Treibstoff-Verhältnis ändert;
   einer Gesamtspeichermengenberechnungseinrichtung (30) zum Berechnen einer Gesamtspeichermenge, die eine Summe einer Sauerstoffspeichermenge, die eine Menge von in dem NOx-Katalysator (18) gespeicherten Sauerstoffmenge vor Starten der Fetterhöhung, und einer NOx-Speichermenge, die eine Menge von in dem NOx-Katalysator (18) gespeicherten NOx-Menge vor Starten der Fetterhöhung ist, basierend auf der **durch** den Abgassensor (26) erzeugten Ausgabe, wenn die Fetterhöhung ausgeführt wird; und
   einer Diagnoseeinrichtung (30) zum Bestimmen eines Verschleißes des NOx-Katalysators (18) basierend auf der NOx-Zuflussmenge und der Gesamtspeichermenge.

2. Katalysatorverschleißüberwachungssystem gemäß Anspruch 1, **dadurch gekennzeichnet, dass** die Diagnoseeinrichtung (30) bestimmt, dass der NOx-Katalysator (18) verschlissen ist, wenn die berechnete Gesamtspeichermenge unterhalb eines Bestimmungswerts für die Gesamtspeichermenge liegt, die gemäß der NOx-Zuflussmenge eingestellt ist.

3. Katalysatorverschleißüberwachungssystem gemäß Anspruch 1 oder 2, **dadurch gekennzeichnet,**

**dass** die Diagnoseeinrichtung (**30**) eine Sauerstoffspeichermengenberechnungseinrichtung (**30**) zum Berechnen der Sauerstoffspeichermenge in der Gesamtspeichermenge, basierend auf der NOx-Zufuhrmenge und der Gesamtspeichermenge, und eine Sauerstoffspeicherfähigkeitsbestimmungseinrichtung (**30**) zum Bestimmen einer Sauerstoffspeicherfähigkeit des NOx-Katalysators (**18**), basierend auf der Sauerstoffspeichermenge, umfasst.

4. Katalysatorverschleißüberwachungssystem gemäß Anspruch 3, **dadurch gekennzeichnet, dass** die Sauerstoffspeicherfähigkeitsbestimmungseinrichtung (**30**) bestimmt, dass die Sauerstoffspeicherfähigkeit des NOx-Katalysators (**18**) verschlissen ist, wenn die berechnete Sauerstoffspeichermenge unterhalb eines Bestimmungswertes für die Sauerstoffspeichermenge liegt, die gemäß der NOx-Zuflussmenge eingestellt ist.

5. Katalysatorverschleißüberwachungssystem gemäß Anspruch 3 oder 4, weiterhin **gekennzeichnet durch**:

    eine Ausführungsbedingungseinstelleinrichtung (**30**) zum Einstellen von mindestens zwei unterschiedlichen Ausführungsbedingungen, unter denen jeweils mindestens eine Fetterhöhung ausgeführt wird, wobei die Sauerstoffspeichermengenberechnungseinrichtung (**30**) die Sauerstoffspeichermenge basierend auf einer Beziehung zwischen der NOx-Zuflussmenge und der Gesamtspeichermenge berechnet, die sich auf mindestens zwei Fetterhöhungen bezieht, die unter den mindestens zwei unterschiedlichen Ausführungsbedingungen ausgeführt werden.

6. Katalysatorverschleißüberwachungssystem gemäß Anspruch 5, **dadurch gekennzeichnet, dass** die Sauerstoffspeichermengenberechnungseinrichtung (**30**) einen Wert berechnet, der äquivalent der Gesamtspeichermenge ist, wenn die NOx-Zuflussmenge 0 ist, durch extrapolieren der Beziehung zwischen der NOx-Zuflussmenge und der Gesamtspeichermenge, die sich auf mindestens zwei Fetterhöhungen bezieht, die unter den mindestens zwei unterschiedlichen Ausführungsbedingungen, dass die NOx-Zuflussmenge mindestens zwei unterschiedliche Pegel erreicht, ausgeführt wird, und die Sauerstoffspeichermengenberechnungseinrichtung (**30**) die Werte als die Sauerstoffspeichermenge betrachtet.

7. Katalysatorverschleißüberwachungssystem gemäß einem der Ansprüche 3 bis 6, **dadurch gekennzeichnet, dass** die Diagnoseeinrichtung (**30**) eine NOx-Speichermengenberechnungseinrichtung (**30**) zum Berechnen der NOx-Speichermenge durch Subtrahieren der Sauerstoffspeichermenge von der Gesamtspeichermenge, und eine NOx-Speicherfähigkeitsbestimmungseinrichtung (**30**) zum Bestimmen der NOx-Speicherfähigkeit des NOx-Katalysators (**18**) basierend auf der berechneten NOx-Speichermenge umfasst.

8. Katalysatorverschleißüberwachungssystem gemäß Anspruch 7, **dadurch gekennzeichnet, dass** die NOx- Speicherfähigkeitsbestimmungseinrichtung (**30**) bestimmt, dass die NOx-Speicherfähigkeit des NOx-Katalysators (**18**) verschlissen ist, wenn die berechnete NOx-Speichermenge unter einem Bestimmungswert für die NOx-Speichermenge liegt, die gemäß der NOx-Zuflussmenge eingestellt ist.

9. Katalysatorverschleißüberwachungssystem gemäß einem der Ansprüche 1 bis 8, **dadurch gekennzeichnet, dass** die NOx-Erfassungseinrichtung (**24**) eine Funktion des Erfassens des Luft-Treibstoff-Verhältnisses des Abgases aufweist, und die Gesamtspeichermengenberechnungseinrichtung (**30**) die Gesamtspeichermenge basierend auf der Ausgabe des Abgassensors (**26**) und das durch die NOx-Erfassungseinrichtung (**24**) erfasste Luft-Treibstoff-Verhältnis berechnet.

10. Katalysatorverschleißüberwachungssystem gemäß einem der Ansprüche 1 bis 9, **dadurch gekennzeichnet, dass** die NOx-Erfassungseinrichtung (**24**) eine Funktion des Erfassens des Luft-Treibstoff-Verhältnisses des Abgases aufweist, und die NOx-Zuflussmengenberechnungseinrichtung (**30**) ein Akkumulieren der Ausgabe der NOx-Erfassungseinrichtung (**24**) startet, wenn das durch die NOx-Erfassungseinrichtung (**24**) erfasste Luft-Treibstoff-Verhältnis sich von einem fetten Luft-Treibstoff-Verhältnis zu einem mageren Luft-Treibstoff-Verhältnis nach Beenden der Fetterhöhung ändert.

11. Katalysatorverschleißüberwachungsverfahren, das ein in einer Abgaspassage (**12**) für eine Verbrennungskraftmaschine (**10**) angebrachten Speicherreduktions-NOx-Katalysator (**18**); einen stromaufwärtig des NOx-Katalysators (**18**) angebrachten NOx-Sensor (**24**), der eine Ausgabe gemäß einer Konzentration von NOx im Abgas erzeugt; und einen stromabwärtig des NOx-Katalysators (**18**) angebrachten Abgassensor (**26**), der eine Ausgabe gemäß einem Luft-Treibstoff-Verhältnis des Abgases erzeugt, verwendet, **gekennzeichnet durch**:

    Berechnen einer NOx-Zuflussmenge (**S102**), die eine Menge von NOx ist, die in den NOx-Katalysator (**18**) strömt, **durch** Akkumulieren der Ausgabe des NOx-Sensors (**24**);

Berechnen einer Gesamtspeichermenge (**S118**), die eine Summe einer Sauerstoffspeichermenge ist, die eine Menge von in dem NOx-Katalysator (**18**) gespeicherten Sauerstoff vor Starten einer Fetterhöhung ist, und einer NOx-Speichermenge, die eine Menge von in den NOx-Katalysator (**18**) gespeicherten NOx vor Starten der Fetterhöhung ist, basierend auf der **durch** den Abgassensor (**26**) erzeugten Ausgabe wenn die Fetterhöhung ausgeführt wird, um temporär das Luft-Treibstoff-Verhältnis von aus der Verbrennungskraftmaschine (**10**) ausgestoßenem Abgas von einem mageren Luft-Treibstoff-Verhältnis auf ein fettes Luft-Treibstoff-Verhältnis oder ein stöchiometrisches Luft-Treibstoff-Verhältnis zu ändern; und Bestimmen eines Verschleißes des NOx-Katalysators (**S122**) basierend auf der NOx-Zuflussmenge und der Gesamtspeichermenge.

## Revendications

**1.** Système de surveillance de la détérioration d'un catalyseur qui détermine la détérioration d'un catalyseur à NOx (18) à réduction de stockage disposé dans un passage d'échappement (12) pour un moteur à combustion interne (10), **caractérisé par** le fait de comprendre :

un moyen (24) de détection des NOx, que l'on dispose en amont du catalyseur à NOx (18), qui génère une sortie en conformité avec la concentration des NOx dans les gaz d'échappement ;
un capteur (26) des gaz d'échappement, que l'on dispose en aval du catalyseur à NOx (18), qui génère une sortie en conformité avec un rapport air-carburant des gaz d'échappement ;
un moyen (30) de calcul de la quantité d'affluence des NOx qui sert à calculer la quantité d'affluence des NOx qui est une quantité des NOx qui se sont introduits dans le catalyseur à NOx (18), en accumulant la sortie du moyen (24) de détection des NOx ;
un moyen (30) d'augmentation riche qui exécute une augmentation riche qui modifie temporairement le rapport air-carburant des gaz d'échappement déchargés du moteur à combustion interne (10), d'un rapport air-carburant pauvre à un rapport air-carburant riche ou à un rapport air-carburant stoechiométrique ;
un moyen (30) de calcul de la quantité totale de stockage qui sert à calculer la quantité totale de stockage qui est la somme d'une quantité de stockage d'oxygène qui est une quantité d'oxygène stocké dans le catalyseur à NOx (18) avant que l'augmentation riche ne commence, et une quantité de stockage des NOx qui est une quantité des NOx stockés dans le catalyseur à NOx (18) avant que l'augmentation riche ne commence, sur la base de la sortie générée par le capteur (26) des gaz d'échappement lors de l'exécution de l'augmentation riche ; et un moyen de diagnostic (30) destiné à déterminer la détérioration du catalyseur à NOx (18) sur la base de la quantité d'affluence des NOx et de la quantité totale de stockage.

**2.** Système de surveillance de la détérioration d'un catalyseur selon la revendication 1, **caractérisé en ce que** le moyen de diagnostic (30) détermine que le catalyseur à NOx (18) est détérioré, lorsque la quantité totale de stockage calculée est en-dessous d'une valeur de détermination pour la quantité totale de stockage, qui est établie selon la quantité d'affluence des NOx.

**3.** Système de surveillance de la détérioration d'un catalyseur selon la revendication 1 ou 2, **caractérisé en ce que** le moyen de diagnostic (30) comporte un moyen (30) de calcul de la quantité de stockage d'oxygène qui sert à calculer la quantité de stockage d'oxygène dans la quantité totale de stockage sur la base de la quantité d'affluence des NOx et la quantité totale de stockage, et un moyen (30) de détermination de la capacité de stockage d'oxygène qui sert à déterminer la capacité de stockage d'oxygène du catalyseur à NOx (18) sur la base de la quantité de stockage d'oxygène.

**4.** Système de surveillance de la détérioration d'un catalyseur selon la revendication 3, **caractérisé en ce que** le moyen (30) de détermination de la capacité de stockage d'oxygène détermine que la capacité de stockage d'oxygène du catalyseur à NOx (18) est détériorée, lorsque la quantité de stockage d'oxygène calculée est en-dessous d'une valeur de détermination pour la quantité de stockage d'oxygène, qui est établie selon la quantité d'affluence des NOx.

**5.** Système de surveillance de la détérioration d'un catalyseur selon la revendication 3 ou 4, **caractérisé par** le fait de comprendre en plus :

un moyen (30) d'établissement de conditions d'exécution qui sert à établir au moins deux conditions d'exécution différentes à chacune desquelles au moins une augmentation riche est exécutée, où le moyen (30) de calcul de la quantité de stockage d'oxygène calcule la quantité de stockage d'oxygène sur la base d'une relation entre la quantité d'affluence des NOx et la quantité totale de stockage, qui se rapporte à au moins deux augmentations riches qui sont exécutées au moins suivant les deux conditions d'exécution différentes.

**6.** Système de surveillance de la détérioration d'un catalyseur selon la revendication 5, **caractérisé en ce que** le moyen (30) de calcul de la quantité de stockage d'oxygène calcule une valeur qui est équivalente à la quantité totale de stockage lorsque la quantité d'affluence des NOx est nulle, en extrapolant la relation entre la quantité d'affluence des NOx et la quantité totale de stockage, qui se rapporte aux au moins deux augmentations riches qui sont exécutées au moins suivant les deux conditions d'exécution différentes où la quantité d'affluence des NOx atteint au moins deux niveaux respectifs différents, et le moyen (30) de calcul de la quantité de stockage d'oxygène considère la valeur comme quantité de stockage d'oxygène.

**7.** Système de surveillance de la détérioration d'un catalyseur selon l'une quelconque des revendications 3 à 6, **caractérisé en ce que** le moyen de diagnostic (30) comporte un moyen (30) de calcul de la quantité de stockage des NOx qui sert à calculer la quantité de stockage des NOx en soustrayant la quantité de stockage d'oxygène de la quantité totale de stockage, et le moyen (30) de détermination de la capacité de stockage des NOx qui sert à déterminer la capacité de stockage des NOx du catalyseur à NOx (18) sur la base de la quantité de stockage des NOx calculée.

**8.** Système de surveillance de la détérioration d'un catalyseur selon la revendication 7, **caractérisé en ce que** le moyen (30) de détermination de la capacité de stockage des NOx détermine que la capacité de stockage des NOx du catalyseur à NOx (18) est détériorée, lorsque la quantité de stockage des NOx calculée est en-dessous d'une valeur de détermination pour la quantité de stockage des NOx, qui est établie selon la quantité d'affluence des NOx.

**9.** Système de surveillance de la détérioration d'un catalyseur selon l'une quelconque des revendications 1 à 8, **caractérisé en ce que** le moyen (24) de détection des NOx détecte le rapport air-carburant des gaz d'échappement, et le moyen (30) de calcul de la quantité totale de stockage calcule la quantité totale de stockage sur la base de la sortie du capteur (26) des gaz d'échappement, et le rapport air-carburant détecté par le moyen (24) de détection des NOx.

**10.** Système de surveillance de la détérioration d'un catalyseur selon l'une quelconque des revendications 1 à 9, **caractérisé en ce que** le moyen (24) de détection des NOx détecte le rapport air-carburant des gaz d'échappement, et le moyen (30) de calcul de la quantité d'affluence des NOx commence à accumuler la sortie du moyen (24) de détection des NOx lorsque le rapport air-carburant détecté par le moyen (24) de détection des NOx change d'un rapport air-carburant riche à un rapport air-carburant pauvre après la fin de l'augmentation riche.

**11.** Procédé de surveillance de la détérioration d'un catalyseur qui utilise un catalyseur à NOx (18) à réduction de stockage disposé dans un passage d'échappement (12) pour un moteur à combustion interne (10); un capteur (24) de NOx que l'on dispose en amont du catalyseur à NOx (18), qui génère une sortie en conformité avec la concentration des NOx dans les gaz d'échappement; et un capteur (26) de gaz d'échappement que l'on dispose en aval du catalyseur à NOx (18), qui génère une sortie en conformité avec un rapport air-carburant des gaz d'échappement, **caractérisé par** le fait de comprendre les étapes où l'on :

calcule une quantité d'affluence des NOx (S102) qui est une quantité des NOx qui se sont introduits dans le catalyseur à NOx (18), en accumulant la sortie du capteur (24) de NOx; calcule la quantité totale de stockage (S118) qui est la somme de la quantité de stockage d'oxygène qui est la quantité d'oxygène stockée dans le catalyseur à NOx (18) avant que l'augmentation riche ne commence, et la quantité de stockage des NOx qui est la quantité de NOx stockée dans le catalyseur à NOx (18) avant que l'augmentation riche ne commence, sur la base de la sortie générée par le capteur (26) des gaz d'échappement lors de l'exécution de l'augmentation riche pour changer temporairement le rapport air-carburant des gaz d'échappement déchargés du moteur à combustion interne (10), d'un rapport air-carburant pauvre à un rapport air-carburant riche ou un rapport air-carburant stoechiométrique; et détermine la détérioration du catalyseur à NOx (S122) sur la base de la quantité d'affluence des NOx et de la quantité totale de stockage.

# FIG.1

# FIG. 2

EP 2 061 958 B1

# FIG.3

EP 2 061 958 B1

NOxIN (MEASURED VALUE)
---- ESTIMATED VALUE

(a)
INFLOW NOx AMOUNT
THAT IS AMOUNT OF
NOx THAT HAS FLOWN
INTO CATALYST

A

t1  t2          t3

(b)
RICH SPIKE
EXECUTION FLAG

FR=1

(c)
OUTPUT OF
DOWNSTREAM-SIDE
OXYGEN SENSOR

RICH
LEAN

(d)
A/F OUTPUT OF
NOx SENSOR

LEAN

STOICHIOMETRIC

(e)
ACCUMULATED
VALUE OF TSA

TSA

TIME

# F I G . 4

RICH

OUTPUT OF
DOWNSTREAM-SIDE
OXYGEN SENSOR

LEAN

$$TSA = |\underline{0.23} \times \underline{GA/(A/F)} \times \underline{(A/F-14.6)}| \times CALCULATION\ ROUTINE\ CYCLE$$

① ② ③

··· (1)

AMOUNT OF $O_2$ CONSUMED PER UNIT TIME

① COEFFICIENT FOR CONVERSION TO $O_2$

② AMOUNT OF FUEL FLOWING INTO CATALYST PER UNIT TIME

③ HEIGHT OF HATCHED PORTION IN DIAGRAM IN LEFT SIDE

LEAN

A/F OUTPUT OF
NOx SENSOR

STOICHIOMETRIC

RICH

TIME

EP 2 061 958 B1

# FIG.5

CATALYST NORMALLY FUNCTIONS

CATALYST MALFUNCTIONS

DETERMINATION VALUE

B

A

TOTAL STORAGE AMOUNT TSA

INFLOW NOx AMOUNT (MEASURED VALUE)

# FIG.6

(II)

(I)

DETERMINATION VALUE

ESTIMATED VARIATION RANGE

A

TOTAL STORAGE AMOUNT TSA

INFLOW NOx AMOUNT (MEASURED VALUE)

# FIG.7

(I) ERRONEOUS DETERMINATION THAT CATALYST NORMALLY FUNCTIONS

(II) ERRONEOUS DETERMINATION THAT CATALYST MALFUNCTIONS

TOTAL STORAGE AMOUNT TSA

B

CATALYST NORMALLY FUNCTIONS

DETERMINATION VALUE

CATALYST MALFUNCTIONS

A

INFLOW NOx AMOUNT (ESTIMATED VALUE)

# FIG.8

```
                    ( START )
                        │
                ┌───────────────┐
                │  READ NOxIN   │──S100
                └───────────────┘
                        │         S102
                        ▼
                   ◇ NOxIN≧A ? ◇──── NO ──────────────────────┐
                        │                                      │
                        │ YES                                  │
                ┌───────────────────┐                          │
                │  FINISH CURRENT   │──S106                    │
                │ ACCUMULATION FOR NOxIN │                     │
                └───────────────────┘                          │
                        │                                      │
                ┌───────────────────────┐                      │
                │ START CURRENT RICH SPIKE │──S108             │
                └───────────────────────┘                      │    S104
                        │                                      ▼
                        ▼              S110              ┌─────────────┐
                ◇  HAS OUTPUT OF                         │   CURRENT   │
                   DOWNSTREAM-SIDE OXYGEN ◇── NO ──┐     │ ACCUMULATION │
                   SENSOR CHANGED TO RICH          │     │  FOR NOxIN  │
                        OUTPUT ?                    │     └─────────────┘
                        │                           │
                        │ YES                       │
                ┌───────────────────────┐           │
                │ FINISH CURRENT RICH SPIKE │──S112  │
                └───────────────────────┘           │
                        │         S114              │
                        ▼                           │
                   ◇ AFNOx>14.6 ? ◇──── NO ─────────┤
                        │                           │
                        │ YES                       │
                ┌───────────────────────┐           │
                │ START ACCUMULATION FOR │──S116     │
                │ NOxIN FOR NEXT RICH SPIKE │        │
                └───────────────────────┘           │
                        │◄──────────────────────────┘
                ┌───────────────┐
                │ CALCULATE TSA │──S118
                └───────────────┘
                        │         S120
                        ▼
                ◇ IS DETERMINATION
                   EXECUTION CONDITION ◇── NO ──────────────────┐
                      SATISFIED ?                               │
                        │ YES    S122                           │
                        ▼                                       │
                   ◇ TSA<B ? ◇──── NO ──────┐       S126        │
                        │ YES    S124       ▼                   │
                ┌───────────────────┐  ┌──────────────────┐     │
                │ DETERMINE THAT CATALYST │ │   DETERMINE    │     │
                │  IS DETERIORATED  │  │ THAT CATALYST     │     │
                └───────────────────┘  │ NORMALLY FUNCTIONS │    │
                        │              └──────────────────┘     │
                        │                     │                 │
                        ▼◄────────────────────┴─────────────────┘
                    ( END )
```

# FIG.9

(a)
INFLOW NOx AMOUNT
THAT IS AMOUNT OF
NOx THAT HAS FLOWN
INTO CATALYST

(b)
RICH SPIKE
EXECUTION FLAG

(c)
OUTPUT OF
DOWNSTREAM-SIDE
OXYGEN SENSOR

(d)
A/F OUTPUT OF
NOx SENSOR

(e)
ACCUMULATED
VALUE OF TSA

EP 2 061 958 B1

# F I G . 10

# F I G . 11

FIG.12

FIG.13

FIG.14

# F I G .15

```
                    ( START )
                        |
                        v
            ┌─────────────────────────┐      S130
     NO     │   IS DETERMINATION       │
   ◄────────│  EXECUTION CONDITION     │
            │      SATISFIED ?         │
            └─────────────────────────┘
                        | YES
                        v
              ┌──────────────────┐  S132
              │  CALCULATE OSC   │
              └──────────────────┘
                        |
                        v
              ┌──────────────────┐  S134
              │  CALCULATE NSA   │
              └──────────────────┘
                        |
                        v                S136
            ┌─────────────────────────┐       NO
            │   OSC < DETERMINATION    │──────────►
            │        VALUE ?           │
            └─────────────────────────┘
                   | YES    S138                    S140
                   v                                 v
         ┌────────────────────────┐      ┌────────────────────────┐
         │    DETERMINE THAT       │      │    DETERMINE THAT       │
         │ OXYGEN STORAGE ABILITY  │      │ OXYGEN STORAGE ABILITY  │
         │   IS DETERIORATED       │      │     IS NORMAL           │
         └────────────────────────┘      └────────────────────────┘
                   |                                 |
                   v◄────────────────────────────────┘
                        S142
            ┌─────────────────────────┐       NO
            │   NSA < DETERMINATION    │──────────►
            │        VALUE ?           │
            └─────────────────────────┘
                   | YES    S144                    S146
                   v                                 v
         ┌────────────────────────┐      ┌────────────────────────┐
         │  DETERMINE THAT NOx     │      │  DETERMINE THAT NOx     │
         │   STORAGE ABILITY IS    │      │   STORAGE ABILITY IS    │
         │    DETERIORATED         │      │      NORMAL             │
         └────────────────────────┘      └────────────────────────┘
                   |                                 |
                   v◄────────────────────────────────┘
                    ( END )
```

F I G . 16
RELATED ART

**EP 2 061 958 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8260949 B